# EUROPEAN PATENT SPECIFICATION

(11) **EP 3 459 225 B1**
(45) Date of publication and mention of the grant of the patent: **23.09.2020**
(21) Application number: 16724735.2
(22) Date of filing: 17.05.2016
(51) Int. Cl.: H04L 29/06, H04L 29/14, G06F 9/455, H04L 12/751, H04L 29/08, H04L 12/715

(54) **METHODS AND APPARATUS FOR ENABLING LIVE VIRTUAL MACHINE (VM) MIGRATION IN SOFTWARE-DEFINED NETWORKING NETWORKS**
VERFAHREN UND VORRICHTUNG ZUR ERMÖGLICHUNG EINER LIVE-MIGRATION EINER VIRTUELLEN MASCHINE (VM) IN SOFTWAREDEFINIERTEN VERNETZUNGSNETZEN
PROCÉDÉS ET APPAREIL POUR PERMETTRE UNE MIGRATION DE MACHINE VIRTUELLE (VM) EN DIRECT DANS DES RÉSEAUX DE MAILLAGE DÉFINI PAR LOGICIEL

(43) Date of publication of application: 27.03.2019
(73) Proprietor: Telefonaktiebolaget LM Ericsson (PUBL), 164 83 Stockholm (SE)
(72) Inventor: LAKSHMIKANTHA, Ashvin, Bangalore 560048 (IN); JOSHI, Vinayak, Bangalore 560037 (IN)
(74) Representative: Zacco Sweden AB
(86) International application number: PCT/IB2016/052873
(87) International publication number: WO 2017/199062

(56) References cited:
- JIAQIANG LIU ET AL: "Software defined live virtual machine migration", 2013 21ST IEEE INTERNATIONAL CONFERENCE ON NETWORK PROTOCOLS (ICNP), IEEE, 7 October 2013 (2013-10-07), pages 1-3, XP032563731, DOI: 10.1109/ICNP.2013.6733642 [retrieved on 2014-02-06]
- Eric Keller ET AL: "Live Migration of an Entire Network (and its Hosts)", , 27 June 2012 (2012-06-27), XP055090324, DOI: 10.1145/2390231.2390250 Retrieved from the Internet: URL:ftp://ftp.cs.princeton.edu/techreports /2012/926.pdf [retrieved on 2013-11-26]
- Ryan Izard: "How to Work with Fast-Failover OpenFlow Groups - Floodlight Controller - Project Floodlight", , 26 April 2016 (2016-04-26), pages 1-7, XP055342620, Retrieved from the Internet: URL:https://floodlight.atlassian.net/wiki/ pages/viewpage.action?pageId=7995427 [retrieved on 2017-02-06]

## Description

### TECHNICAL FIELD

Embodiments of the invention relate to the field of packet networks; and more specifically, to software defined networking.

### BACKGROUND

Software-Defined Networking (SDN) is an approach to computer networking that allows network administrators to manage network services through abstraction of lower-level functionality. This is done by decoupling the system that makes decisions about where traffic is sent (the control plane) from the underlying systems that forward traffic to the selected destination (the data plane). In such a system, a network controller, which is typically deployed as a cluster of server nodes, has the role of the control plane and is coupled to one or more network elements that have the role of the data plane. Each network element may be implemented on one or multiple network devices. The control connection between the network controller and network elements is generally a TCP/UDP based communication. The network controller communicates with the network elements using an SDN protocol (e.g., OpenFlow, I2RS, etc.).

For implementing SDN, the Open Networking Foundation (ONF), an industrial consortium focusing on commercializing SDN and its underlying technologies, has defined a set of open commands, functions, and protocols. The defined protocol suites are known as the OpenFlow (OF) protocol. The network controller, acting as the control plane, may then program the data plane on the network elements by causing packet handling rules to be installed on the forwarding network elements using OF commands and messages. These packet handling rules may have criteria to match various packet types as well as actions that may be performed on those packets. The forwarding plane includes forwarding tables (e.g., flow tables, group tables) which may be distributed across multiple data-path network elements

Cloud computing is network-based computing that enable convenient, on-demand access to shared processing resources and data. It is a model for enabling ubiquitous, on-demand access to a shared pool of configurable computing resources (e.g., networks, servers, storage, applications and service) that can be quickly provisioned and released with minimal management effort. Cloud computing and storage solutions provide users and enterprises with various capabilities to store and process their data in third-party data centers.

Cloud computing infrastructure may include one or more cloud hosts, which may be a set of one or more virtual machines running on a network device. Each virtual machine may be coupled to a network element coupling the virtual machine with the network. The network elements can be part of a data plane of a SDN network.

In a cloud computing environment, the physical location of the virtual machines (VMs) may be subject to migration. For example, a VM may be migrated from a first physical location within a first network device to another network device in order to optimize resource efficiency and energy efficiency. For example, if a cloud computing system includes several network devices (e.g., servers) running, and each ND hosts a single VM with a CPU utilization of 10%, then the operator of the cloud computing system can migrate all the VMs to a single ND and shut down the remaining NDs. Such a migration improves both resource efficiency as well as energy efficiency.

Several approaches have been proposed for performing the migration of a VM machine from a network device to another network device. Generally, migration of MVs can be classified into two main categories: 1) cold VM migration; and 2) live VM migration. In cold VM migration, the migrating VM is shutdown on the ND on which it resides and rebooted on the other ND. In a live VM migration approach, the running VM is copied to another ND and is brought up almost instantaneously; then the original VM is brought down. This approach provides a faster VM migration, however it is more complex since the states of the two VMs need to be synchronized before the first VM is brought down. There exists various mechanisms based on memory copy which provide state synchronization between the two VMs.

The memory copy based state synchronization techniques ensure that the migrating VM's state is updated in a manner such that the migration of the VM is not noticeable by an end user. However, in a cloud computing deployment, hundreds of other network elements (e.g., switches (typically virtual switches - vSwitches)) have to be updated about the VM migration in order to ensure update of the routes of the traffic handled by the VM. Without the update of the NEs, the outdated location of the VM (i.e., the ND that hosted the VM prior to the migration of the VM) would continue to receive the traffic.

Typically in VM migration solutions all the updates of the network's control plane and forwarding planes are performed after the VM has moved. In standard VM migration approaches cloud orchestrators in charge of the management of the cloud devices do not update the network elements and do not collaborate with network controllers for the update of the network. The network elements perform the update of the forwarding information using Layer 2 (L2) learning or through programming from the network controller (e.g., in case of advanced network forwarding such as Layer 3 (L3) forwarding, service chaining etc.).

Thus in standard approaches, the update of the network states is performed only after the live migration of a VM has occurred, and it comes at the expense of traffic disruption caused by a delay in the convergence of the network states.

Jiaqiang Liu et al: "Software Defined Live Virtual Machine Migration" discloses a software defined approach for live VM migration. Eric Keller et al: "Live Migration of an Entire Network (and its Hosts)" discloses Live Migration of Ensembles (LIME) for migration an entire network ensemble.

### SUMMARY

One general aspect includes a method in a software-defined networking (SDN) controller that is communicatively coupled with a cloud orchestrator, of enabling a live migration of a virtual machine from a first network device to a second network device, where the virtual machine processes one or more flows received at the first network device from a third network device. The method includes receiving from the cloud orchestrator an indication that migration of the virtual machine from the first network device to the second network device is to be initiated. The method continues with in response to receiving the indication, causing the third network device to forward the one or more flows towards the first network device by passing through the second network device. The method further includes transmitting to the cloud orchestrator an indication that the migration of the virtual machine can be performed, where the indication causes the cloud orchestrator to complete the migration of the virtual machine from the first network device to the second network device; and in response to the migration of the virtual machine to the second network device, causing the second network device to process the one or more flows locally instead of forwarding the one or more flows to the first network device.

One general aspect includes a software-defined networking (SDN) controller to be communicatively coupled with a cloud orchestrator, for enabling live migration of a virtual machine from a first network device to a second network device, where the first network device receives one or more flows from a third network device. The SDN controller includes: a non-transitory computer readable medium to store instructions; and a processor coupled with the non-transitory computer readable medium to process the stored instructions to receive from the cloud orchestrator an indication that migration of the virtual machine from the first network device to the second network device is to be initiated and in response to receiving the indication, to cause the third network device to forward the one or more flows towards the first network device by passing through the second network device. The processor is further to transmit to the cloud orchestrator an indication that the migration of the virtual machine can be performed, where the indication causes the cloud orchestrator to complete the migration of the virtual machine from the first network device to the second network device; and in response to the migration of the virtual machine to the second network device, to cause the second network device to process the one or more flows locally instead of forwarding the one or more flows to the first network device.

One general aspect includes a non-transitory computer readable storage medium storing instructions which when executed by a processor of a software-defined networking (SDN) controller to be communicatively coupled with a cloud orchestrator, causes the SDN controller to perform operations for enabling live migration of a virtual machine from a first network device to a second network device, where the first network device receives one or more flows from a third network device, the operations including: receiving from the cloud orchestrator an indication that migration of the virtual machine from the first network device to the second network device is to be initiated; in response to receiving the indication, causing the third network device to forward the one or more flows towards the first network device by passing through the second network device; transmitting to the cloud orchestrator an indication that the migration of the virtual machine can be performed, where the indication causes the cloud orchestrator to complete the migration of the virtual machine from the first network device to the second network device; and in response to the migration of the virtual machine to the second network device, causing the second network device to process the one or more flows locally instead of forwarding the one or more flows to the first network device.

### BRIEF DESCRIPTION OF THE DRAWINGS

The invention may best be understood by referring to the following description and accompanying drawings that are used to illustrate embodiments of the invention. In the drawings:
Figure 1A illustrates a block diagram of an exemplary system for enabling a hitless and seamless migration of a virtual machine from a first network device to a second network device according to some embodiments.
Figure 1B illustrates a block diagram of an exemplary system for enabling a hitless and seamless migration of a virtual machine from a first network device to a second network device according to some embodiments.
Figure 2A illustrates a block diagram of exemplary detailed operations performed for enabling a seamless migration of a VM in a direct attachment scenario in accordance with some embodiments.
Figure 2B illustrates a block diagram of exemplary detailed operations performed for enabling a seamless migration of a VM in an indirect attachment scenario in accordance with some embodiments.
Figure 3A illustrates a flow diagram of exemplary flow operations performed in a network controller of an SDN network for enabling live migration of a virtual machine in accordance with some embodiments.
Figure 3B illustrates a flow diagram od detailed operations for causing a network device to forward flows to the network device including the migrating virtual machine by passing through the network device to include the virtual machine following the migration in accordance with some embodiments.
Figure 4A illustrates connectivity between network devices (NDs) within an exemplary network, as well as three exemplary implementations of the NDs, according to some embodiments of the invention.
Figure 4B illustrates an exemplary way to implement a special-purpose network device according to some embodiments of the invention.
Figure 4C illustrates various exemplary ways in which virtual network elements (VNEs) may be coupled according to some embodiments of the invention.
Figure 4D illustrates a network with a single network element (NE) on each of the NDs, and within this straight forward approach contrasts a traditional distributed approach (commonly used by traditional routers) with a centralized approach for maintaining reachability and forwarding information (also called network control), according to some embodiments of the invention.
Figure 4E illustrates the simple case of where each of the NDs implements a single NE, but a centralized control plane has abstracted multiple of the NEs in different NDs into (to represent) a single NE in one of the virtual network(s), according to some embodiments of the invention.
Figure 4F illustrates a case where multiple VNEs are implemented on different NDs and are coupled to each other, and where a centralized control plane has abstracted these multiple VNEs such that they appear as a single VNE within one of the virtual networks, according to some embodiments of the invention.
Figure 5 illustrates a general purpose control plane device with centralized control plane (CCP) software 550), according to some embodiments of the invention.

### DETAILED DESCRIPTION

The following description describes methods and apparatus for enabling live migration of a virtual machine in an SDN network. In the following description, numerous specific details such as logic implementations, opcodes, means to specify operands, resource partitioning/sharing/duplication implementations, types and interrelationships of system components, and logic partitioning/integration choices are set forth in order to provide a more thorough understanding of the present invention. It will be appreciated, however, by one skilled in the art that the invention may be practiced without such specific details. In other instances, control structures, gate level circuits and full software instruction sequences have not been shown in detail in order not to obscure the invention. Those of ordinary skill in the art, with the included descriptions, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed text and blocks with dashed borders (e.g., large dashes, small dashes, dot-dash, and dots) may be used herein to illustrate optional operations that add additional features to embodiments of the invention. However, such notation should not be taken to mean that these are the only options or optional operations, and/or that blocks with solid borders are not optional in certain embodiments of the invention.

In the following description and claims, the terms "coupled" and "connected," along with their derivatives, may be used. It should be understood that these terms are not intended as synonyms for each other. "Coupled" is used to indicate that two or more elements, which may or may not be in direct physical or electrical contact with each other, co-operate or interact with each other. "Connected" is used to indicate the establishment of communication between two or more elements that are coupled with each other.

An electronic device stores and transmits (internally and/or with other electronic devices over a network) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other form of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set or one or more physical network interface(s) to establish network connections (to transmit and/or receive code and/or data using propagating signals) with other electronic devices. One or more parts of an embodiment of the invention may be implemented using different combinations of software, firmware, and/or hardware.

The embodiments of the present invention provide methods and apparatuses for enabling a seamless live migration of a virtual machine in a Software-Defined networking network. The embodiments presented herein enable a seamless migration of a VM from a first ND to a second ND while ensuring a fast convergence of the network states in the network. The embodiments, provide a coordination between the cloud orchestrator, which is operative to manage the cloud computing system, and the SDN controller, which is operative to control the network. The coordination between the two components ensures that the migration delay is negligible and does not require high resources for the SDN controller. In one embodiment, an SDN controller controls a data plane including a first network device on which a virtual machine runs, a second network device to which the VM is to migrate and at least a third network device coupled with the first network device and which forwards one or more flows towards the first network device. The network controller receives from the cloud orchestrator an indication that migration of the virtual machine from a first network device to a second network device is to be initiated prior to migrating the VM. Upon receipt of the indication, the SDN controller causes a third network device to forward the one or more flows towards the first network device by passing through the second network device, consequently adding the second network device as a next hop the one or more flows prior to reaching the first network device. The cloud orchestrator may then start the migration of the VM. In response to the migration of the virtual machine to the second network device, the network controller causes the second network device to process the one or more flows locally instead of forwarding the flows to the first network device.

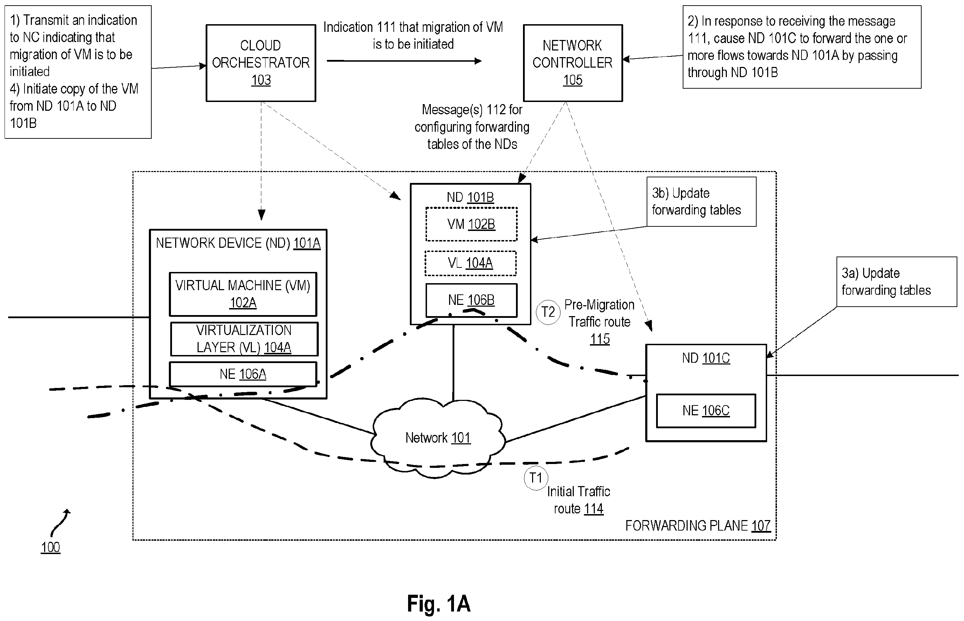

Figures 1A-1B illustrate block diagrams of an exemplary system 100 for enabling a hitless and seamless migration of a virtual machine from a first network device to a second network device according to some embodiments. The system 100 includes NDs 101A-C, the cloud orchestrator 103 and the network controller 105. The NDs 101A, 101B and the cloud orchestrator 103 are part of a cloud computing system offering cloud services to end users. A service is a software process, platform, infrastructure, or anything else that a cloud provider might provide to a client using computer-based technologies. Examples of service categories include software as a service (SaaS), platform as a service (PaaS), and infrastructure as a service (IaaS). Examples of services include customer relationship management, email servers, database software, web servers, virtual machines, storage servers, backup services, news delivery services, and gaming services.

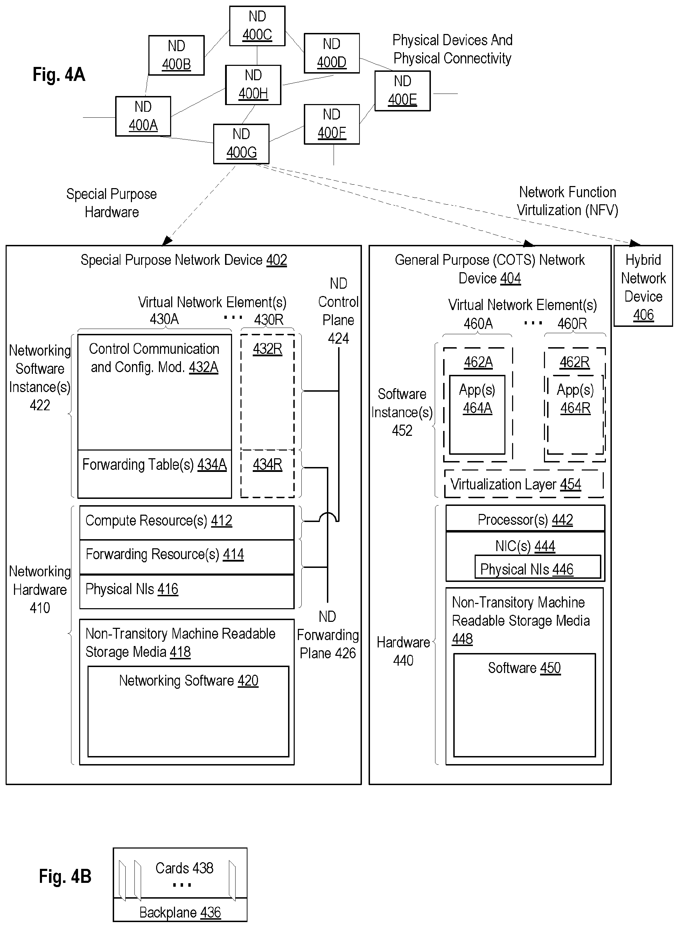

The cloud computing system includes one or more cloud hosts. In the following description a host is referred to as a network device. A network device (ND) is an electronic device that communicatively interconnects other electronic devices on the network (e.g., other network devices, end-user devices). Some network devices are "multiple services network devices" that provide support for multiple networking functions (e.g., routing, bridging, switching, Layer 2 aggregation, session border control, Quality of Service, and/or subscriber management), and/or provide support for multiple application services (e.g., data, voice, and video). In some embodiments, NDs 101A-B are implemented as a general purpose network device 404 or a hybrid network device 406 as described in further details with reference to Figure 4A. In one exemplary embodiment, the ND 101A includes a virtual machine (VM) 102A, a virtualization layer 104A, and a network element (NE) 106A (e.g., a virtual switch). The virtual machine 102A represents an instance of one or more applications running on a guest operating system. The VM 102A runs on top of a virtualization layer 104A (e.g., a hypervisor). The VM 102A is coupled with the NE 106A to receive and forward data packets to/from other network devices. The NE 106A transfers data packets between physical interfaces and the VM 102A.

In the illustrated exemplary embodiment, the VM 102A receives one or more flows of packets from the network device 101C. For example at time T1, the ND 101A may receive one or more flows through an initial route 114. While the embodiments herein will be described with respect to one or more flows received from ND 101C, this example is provided for illustrative purposes and is not intended to be a limitation of the embodiments of the present invention. In typical systems, the ND 101A may receive flows of packets from multiple network devices (e.g., hundreds or thousands of network devices) part of the same data plane 107.

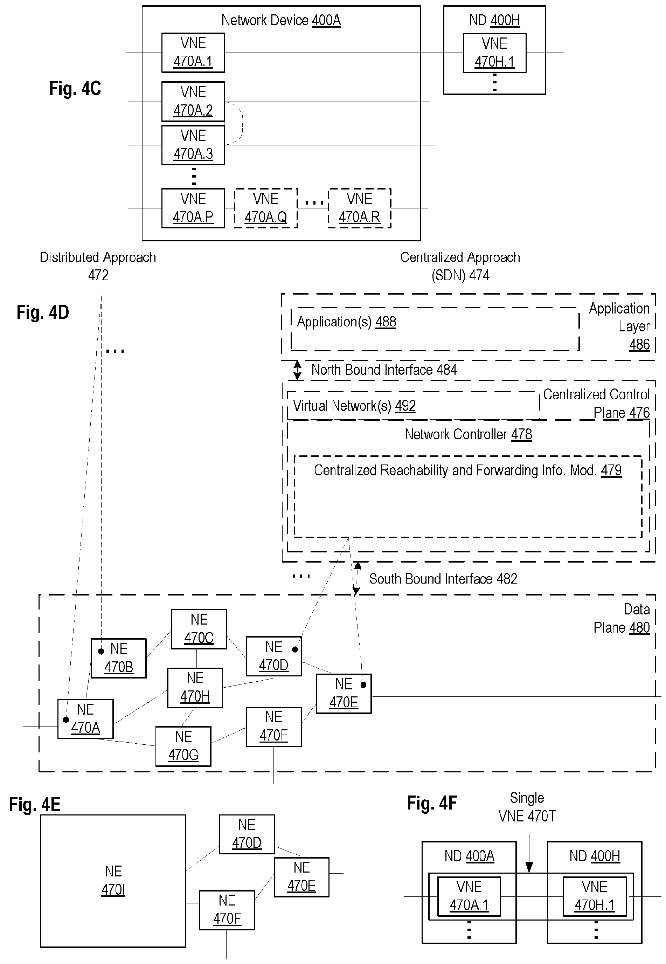

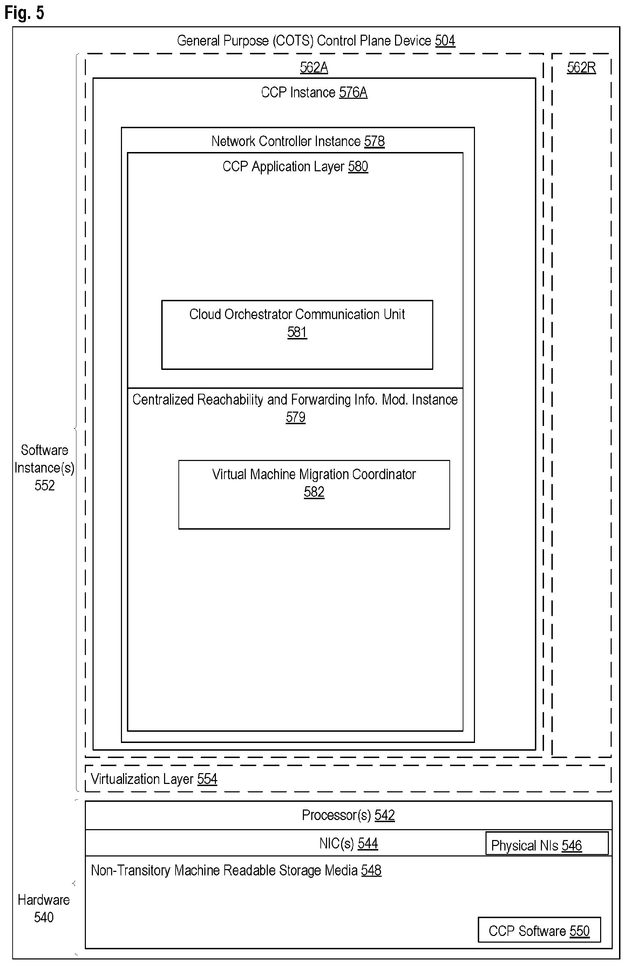

ND 101C is an electronic device part of a network and coupled with ND 101A. ND 101C may transmit and receive packets from ND 101A through a network 101. In some embodiments, ND 101C may be directly coupled with the ND 101D through a physical connection, while in other embodiments, the two network devices may be coupled through an indirect connection passing through one or more other network devices of the network 101. The network devices 101A-C are part of the forwarding plane 107, which receives control information and configuration parameters from the network controller 105. In some embodiments, the network controller 105 is part of a centralized control plane of a SDN network and is implemented as described in further details with reference to Figures 4D and 5.

The system 100 further includes cloud orchestrator 103. Cloud orchestrator 103 manages the connections and interactions among various hosts, services, of a cloud computing infrastructure. The cloud infrastructure includes one or more network devices (e.g., ND 101A and ND 101B), which host the cloud services. Cloud orchestrator 103 can send one or more messages or communicate with the components of the cloud infrastructure to migrate or instruct the NDs in the cloud infrastructure to migrate virtual machines to and from other NDs. Cloud orchestrator may also be able to perform other tasks, such as creating virtual machines, configuring settings for the cloud network, server end stations, and virtual machines, updating configuration information, provide an administrative interface to an administrator, gather statistics and data about the cloud, automate workflows such as backups, and other tasks for managing the cloud infrastructure and related hardware and software. In some embodiments, the cloud orchestrator 103 and the network controller 105 may be operated by the same administration entity, while in alternative embodiments, the two components can be operated by different administration entities. Further the cloud orchestrator 103 may be implemented as a combination of software, firmware and/or hardware. The cloud orchestrator 103 and the network controller 105 may be part of a same network device or alternatively implemented on separate network devices.

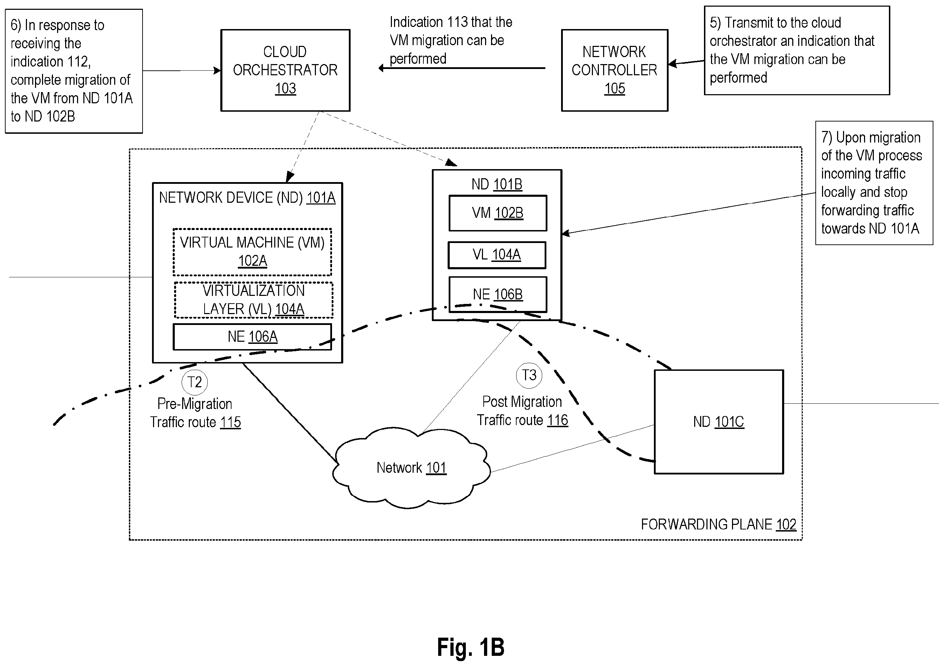

The network controller 105 and the cloud orchestrator 103 are operative to collaborate to enable a seamless and hitless migration of a virtual machine. The embodiments, of the invention will be described with reference to VM 102A migrating from ND 101A to ND 101B. A person of skill in the art would recognize that each network device may include more than one VM running on a ND and the cloud orchestrator 103 and the network controller 105 are operative to migrate more than one VM from a first ND to another ND. Referring to Figure 1, At operation 1, the cloud orchestrator 103 transmits an indication to the network controller 105 that a migration of the VM 102A is to be initiated towards the ND 101B. The indication 111 may be part of a message (e.g., a representational state transfer (REST) application program interface (API) call, or an HTTP message, etc.) transmitted from the cloud orchestrator 103 to the network controller 105.

At operation 2, upon receipt of the indication, the network controller 105 causes the network device 101C to forward the traffic originally destined to the ND 101A towards the ND 101B. Thus, the network controller updates the forwarding states of the network such that all flows routed through the initial route 114 at time T1, prior to the receipt of the indication 111, are routed through the ND 101B prior to reaching ND 101A. The network controller 105 reconfigures the NDs by transmitting one or more control messages 112 to each of the NDs 101A, 101B, and 101C causing each of the network devices to update forwarding information such that the flows initially forwarded from ND 101C to ND 101A are first forwarded to ND 101B prior to reaching ND 101A. In some embodiments, the network controller may transmit OpenFlow messages for updating the forwarding tables of each of the NDs.

At operations 3a, upon receipt of control information from the network controller 105, the ND 101C updates entries, associated with the flows initially directed towards ND 101A, of the forwarding tables of the network element (NE) 106C to forward the flows towards ND 101B instead of ND 101A. At operation 3b, the ND 101B updates and/or creates an entries associated with these same flows to be forwarded to ND 101A.

In some embodiments, while the network controller 105 reconfigures the NDs, the cloud orchestrator 103 may initiate, at operation 4, the instantiation of a new VM 102B on ND 101B. The cloud orchestrator may start syncing the state of the active VM 102A with the new VM 102B. In some embodiments, this operation is performed in parallel to the reconfiguration of the data plane 107 including the NDs 101A-C, in other embodiments, the copy of the VM may be initiated prior to the start of the reconfiguration of the network, alternatively the copy of the VM may be performed following the completion of the reconfiguration of the data plane without departing from the scope of the present invention. In all of these embodiments, even if the copy of the VM (i.e., instantiation of a new VM at ND 101B and the synchronization of the states between VM 102A and VM 102B) is initiated, the migration of the VM is however not completed prior to the complete reconfiguration of the network as it will be described in further details below with reference to Figure 1B. In some embodiments, the synchronization of the states between VM 102A and VM 102B is carried out through a different interface that has no bearing on the on-going data traffic forwarded through the NDs.

Referring now to Figure 1B, when reconfiguration of the data plane is completed, the flows (initially forwarded from ND 101C to ND 101A via route 114) are routed through the pre-migration traffic route 115, passing through the ND 101B prior to reaching ND 101A. When the configuration of the data plane is completed, the network controller 105 transmits to the cloud orchestrator 103, at operation 5, an indication 113 that the migration of the VM 102A can be performed. The indication 113 may be part of a message (e.g., a REST API call, or an HTTP message, etc.) transmitted from the network controller 105 to the cloud orchestrator 103.

Upon receipt of the indication 113, the cloud orchestrator 103 completes, at operation 6, the migration of the VM from ND 101A to ND 101B. In some embodiments, the cloud orchestrator may have initiated the copy of the VM 102A to the new VM 102B on ND 101B prior to receiving the indication 113, in these embodiments, upon receipt of the indication 113, the cloud orchestrator 103 completes the synchronization of the states between the VM 102A and VM 102B and couples to the VM 102B to the network by connecting the VM to the NE 106B. Once the VM 102B is coupled with the network, at operation 7, the VM 102B starts processing incoming traffic locally and stops forwarding traffic towards ND 101A causing the flows initially transmitted from ND 101C to the ND 101A to be forwarded through the post-migration route 116 from ND 101C to ND 101B.

The embodiments introduce a temporary additional hop across the cloud computing infrastructure for flows of packets forwarded through the ND hosting the migrating VM (e.g., adding ND 101B in a route for flows of packets between ND 101A and ND 101C). However, any delay that may be experienced by the packets of the flows during this is temporary period is less detrimental to the network's performance and reliability than dropping packets during the migration of the VM in standard approaches. The additional delay is in the order of microseconds and can even be negligible (e.g., especially in case of applications over Wide Area Networks (WAN) links). For example, a web query from an end user device to a web server residing in the cloud computing system results in multiple message exchanges across VMs in the cloud (application server, database server etc.). The end-to-end transaction between the web server and the end user device, in such an example, experiences a delay of milliseconds given the WAN link. Therefore, and additional temporary delay caused by an extra hop (which is in the order of microseconds) does not have a noticeable impact on the end-to-end transaction.

By adding the temporary hop prior to the migration of the VM, the present embodiments support a seamless and hitless live migration of a virtual machine from a network device to another network device. Contrary to prior approaches, the embodiments enable the live migration of the VM without requiring the use of expensive network controller to perform complex state synchronization. In addition, the configuration of the network during the entire migration process does not require large programming rates. The migration delay is reduced from an order of milliseconds to microseconds. In some embodiments, the solution presented herein can be achieved in an Open Flow network without the need of establishing any OpenFlow extensions.

In one embodiments, the VM 102A is directly coupled with the NE 106A, which is controlled by the network controller 105. This scenario may be referred to as "direct attachment." For example, when the NE 106 is a virtual switch, the tap port connecting the VM 102A to the virtual switch appears as an OpenFlow (OF)/Open vSwitch Database Management Protocol (OVSDB) port. Alternatively, the VM 102A may be coupled to another, intermediary, NE (e.g. Linux Bridge), which in turn is connected to the NE 106A. This scenario may be referred to as an "indirect attachment." In this scenario the intermediary NE is not controlled via the network controller 105 and only NE 106A which is indirectly coupled with the VM is. The two NEs reside within the same ND. The embodiments, described with reference to Figures 1A-1B apply to both the direct attachment and the indirect attachment scenario such that minimal forwarding changes are performed after the migration of the virtual machine.

### Direct Attachment

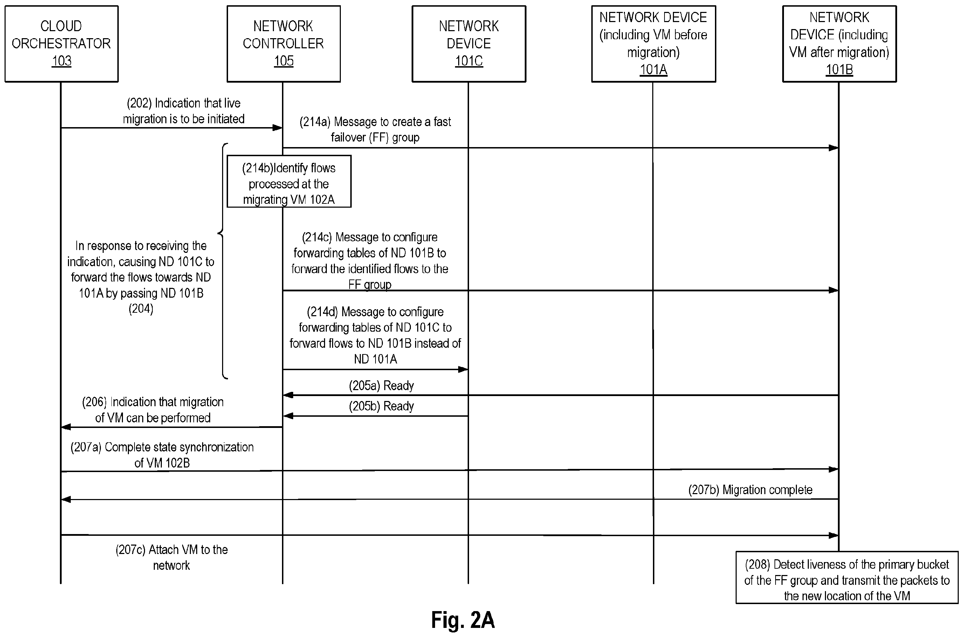

Figure 2A illustrates a block diagram of exemplary detailed operations performed for enabling a seamless migration of a VM in a direct attachment scenario in accordance with some embodiments. At operation 202, the cloud orchestrator 103 transmits an indication that live migration of the VM 102A is to be initiated. Flow then moves to the set of operations 204, in which the network controller 105 causes ND 101C to forward the flows previously destined to ND 101A to an additional hop (ND 101B) prior to reaching ND 101A. This configuration of the network devices is performed in response to the receipt of the indication that the migration is to be initiated from the cloud orchestrator 103.

In one embodiment, when the migrating VM 102B is to be coupled with the network in a direct attachment mode through the NE 106B, the network controller 105 identifies at operation 214a, a set of flows that are forwarded to ND 101A and being processed at the migrating VM 102A. At operation 214b, the network controller 105 transmits a message for creating a fast-failover (FF) group on the NE 104B residing on the ND 101B, which is to host the virtual machine following the migration. While the embodiments described below refer to group configuration with respect to OpenFlow, the embodiments are not so limited and may apply to future versions of OpenFlow and/or different communication protocols between the control plane (network controller 105) and the forwarding plane (NDs 101A-C).

The fast failover group includes a list of one or more buckets. In addition to a list of actions, each bucket has a watch port and/or watch group as a special parameter. The watch port/group will monitor the "liveness" or up/down status of the indicated port/group. If the liveness is deemed to be down, then the bucket will not be used. If the liveness is determined to be up, then the bucket can be used. Only one bucket can be used at a time, and the bucket in use will not be changed unless the liveness of the currently used bucket's watch port/group transitions from up to down. When such an event occurs, the FF group selects the next bucket in the bucket list with a watch port/group that is up.

The network controller 105 configures the primary bucket of the FF group to correspond to the port on NE 106B connecting to the VM 102B (at this point in the process VM 102B is not migrated yet, only the port on NE 106B is created by the network controller 105). The secondary bucket of the fast failover group will correspond to the remote port associated with the NE of the ND on which the VM is currently residing (here NE 106A). The primary bucket is "down" such that traffic does not flow through the port to which the primary bucket corresponds (here the local port of the NE 106B).

The network controller 105 instructs the creation of a FF group at the ND 101B, where the FF group is associated with a group identifier (group ID) and a group action. The group ID uniquely identifies the group and the group action indicates the type of the group and the action to be performed on the flows associated with the group. In a non-limiting example, the group ID may be set to a value of "1234", and the group action may be of the form: "Group Type = FF, Action Buckets = {(Output = LocalPort-Y), (Output = SourceNE.RemotePort-X)}.

Thus in this example, the type of the group indicates that the group is a fast failover group with a first primary bucket indicating that the flows should be output to a local port "Y", or in other words that the flows are to be processed locally at this NE when the local port Y is up. Thus, the port Y (which is the local port of the NE 106B) is a "watch port," such that when the liveness of this port is detected, traffic flows from this port. Further the group includes a second bucket, which is configured by the network controller 105 to output flows to SourceNE.RemotePort-X (which is associated here with the ND 101A including the VM 102A prior to the migration). Thus prior to the migration of the VM 102A from ND 101A to ND 101B, the network controller 105 configures a FF group at the ND receiving the migrating VM, here ND 101B, such that the flows received for the group are transmitted to the ND 101A.

The flow of operations then moves to operation 214b at which the network controller 105 identifies the set of flows processed at the migrating VM 102A received from ND 101C. At operation 214c, the network controller 105 transmits a message to the ND 101B to configure the forwarding tables of NE 106B of ND 101B to output the identified flows to the FF group. While the embodiments, are described with reference to a single ND (ND 101C) forwarding flows to ND 101A, the embodiments are not so limited, and the ND 101A may receive flows that are processed at the migrating VM 102A from multiple network devices. When the migrating VM 102A handles flows from multiple ND, the network controller identifies all these flows and configures forwarding tables of the NE 106B of ND 101B to include entries for each of these flows such that the action performed on these flows is the output to the FF group. Thus, in these embodiments, all the IP prefixes (identifies the flows) associated with the migrating VM 102A are identified and programmed on the destination network element 106B. The action for these IP prefixes if the output to the FF group as identified with the group ID.

Referring back to the previous example, where the FF group has a group ID = 1234, for an exemplary flow identified with an IP prefix = 10.10.0.0/16, the network controller may transmit a message to create a forwarding table entry at the NE 106B, such that the entry is:
Table: Prefix = 10.10.0.0/16 and the Table Action : Action = Group, Goto Table = FFtable, GroupID = 1234.

Once the NE 106B is configured with the FF group and the forwarding table entries for each flow associated with the migrating VM 102A output to the FF group, the network controller 105 may now modify the forwarding tables in the other network devices (e.g., ND 101C) which forward flows to the ND 101A prior to the migration of the VM 102A. At operation 214d, the network controller 105 transmits a message to ND 101C to configure forwarding entries of the ND 101C to forward the identified flows to ND 101B instead of ND 101A adding a hop in the route of these flows prior to reaching ND 101A.

Referring back to the previous example, where the exemplary flow is identified with IP prefix = 10.10.0.0/16, the network controller transmits a message to create a forwarding table entry at the NE 106C, such that the entry is:
Table: Prefix = 10.10.0.0/16 Table Action : Action = {(Output =

DestinationNE. Tunnel)}. In this example, upon receipt of a packet matching the prefix 10.10.0.0/16, ND 101C outputs the packet to the destination port associated with NE 106B. The network controller performs this configuration on all NDs coupled with the ND 101A which forwards flows processed at the migrating VM 102A such that all the flows are routed through the ND 101B prior to reaching ND 101A.

Flow then move to operations 205a and 205b, where the network controller 105 receives a message indicating that the configuration of each of the ND 101B and ND 101C is complete and the two devices are in a ready state with respect to the migration of the VM 102A. Following the receipt of these messages, the network controller 105 transmits, at operation 206, a message including an indication that the VM migration can now be performed. At this point the network components are ready to handle a seamless and hitless migration of the VM 102A from ND 101A to ND 101B without interruption of the traffic for the flows handled by the migrating VM.

At operation 207a upon receipt of the message from the network controller 105 that the network is ready for the VM migration, the cloud orchestrator 103 completes the synchronization of the states of the newly created VM 102B in ND 101B. In some embodiments, the cloud orchestrator 103 may have initiated the copy of the VM 102A to the new VM 102B on ND 101B prior to receiving, in these embodiments, upon receipt of the indication from the network controller 105, the cloud orchestrator 103 completes the synchronization of the states between the VM 102A and VM 102B. In other embodiments, the migration of the VM may have not started yet, and the cloud orchestrator 103 may initiate and complete the VM migration at operation 206. Flow then moves to operation 207b, at which the cloud orchestrator receives a message from the ND 101B indicating that the migration is complete. When the migration is complete, the cloud orchestrator configures the VM 102B to be coupled to the network by connecting to the NE 106B. At operation 208, the ND 101B detects liveness of the primary bucket of the FF group and transmits the packets to the new location of the VM (i.e., to the local port of the NE 106B) instead of forwarding the packet to the port associated with the ND 101A. Thus, once VM 102B is coupled with the network and the local port is up, the VM 102B starts processing incoming traffic locally and stops forwarding traffic towards ND 101A causing the flows initially transmitted from ND 101C to the ND 101A to be forwarded through the post-migration route 116 from ND 101C to ND 101B.

In some embodiments, after the traffic has been steered to the new VM (VM 102B), the cloud orchestrator 103 may disconnect VM 102A from the network and may shut it down. The cloud orchestrator 103 may also send out a "clean up" message to the network controller 105 instructing the controller to perform of a clean of all obsolete forwarding table entries. At the reception of this message, the network controller 105 deletes the secondary bucket in the FF group as it is no longer valid. The structure of the group entry will be updated to the following expression:

Group ID: 1234 ; Group Action : Group Type = FF, Action Buckets = {(Output = LocalPort-Y) } .

Thus in the scenario of direct attachment, the use of a FF group enables rerouting of packets when a transition occurs within the FF (i.e., when the local port of the FF group changes from down to up) to be more efficient than standard VM migration techniques in which the network controller would handle reconfiguration of the network following the migration of the VM. With FF group, the switch between the two routes for the flows (from the output to ND 101A to output to the local port) takes place entirely in the data plane upon detection that the local port is up without any intervention or delay caused by the network controller.

### Indirect Attachment

Having described embodiments of the invention relating to direct attachment scenarios, alternative embodiment(s) will now be described. Like the previous embodiment(s), these alternative embodiment(s) allow for a seamless VM migration in an SDN network. However, unlike the previous embodiment(s), these embodiment(s) relate to scenarios in which the migrating VM will connect indirectly to the NE 106B through another network element (e.g., a Linux bridge). In this scenario the additional NE coupling the VM 102B to the NE 106B is not controlled by the network controller 105 and may not perform a dynamic route switch upon detection of the migration of the VM 102B.

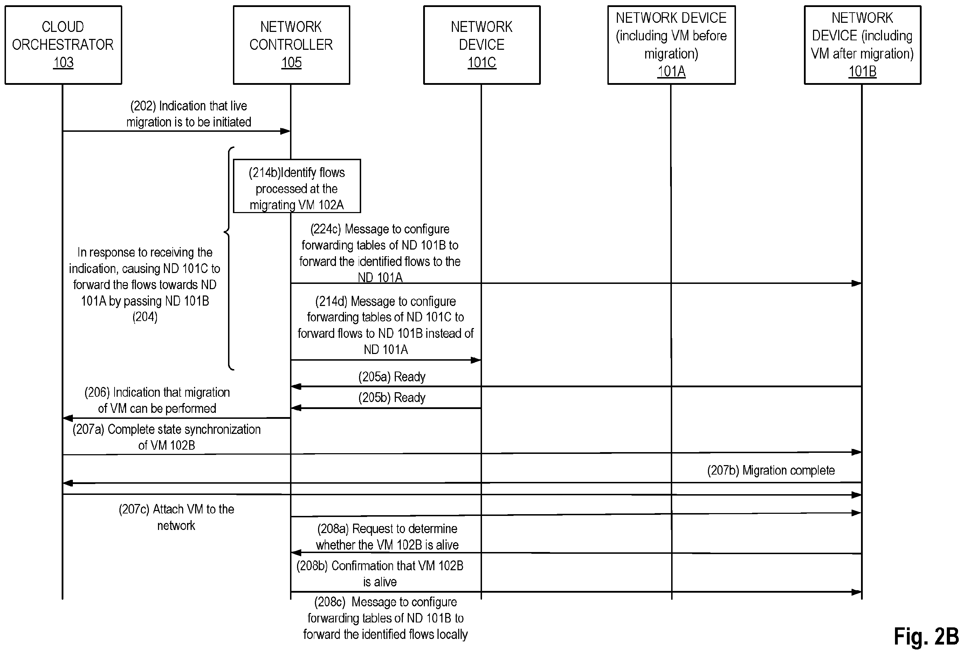

Figure 2B illustrates a block diagram of exemplary detailed operations performed for enabling a seamless migration of a VM in an indirect attachment scenario in accordance with some embodiments. In the following description, identical reference numerals will indicate similar operations to the ones performed in Figure 2A. At operation 202, the cloud orchestrator 103 transmits an indication that live migration of the VM 102A is to be initiated. Flow then moves to the set of operations 204, in which the network controller 105 causes ND 101C to forward the flows previously destined to ND 101A to an additional hop (ND 101B) prior to reaching ND 101A. This configuration of the network devices is performed in response to the receipt of the indication that the migration is to be initiated from the cloud orchestrator 103.

In one embodiment, when the migrating VM 102B is to be coupled with the network in an indirect attachment mode, the network controller 105 identifies at operation 214a, a set of flows that are forwarded to ND 101A and being processed at the migrating VM 102A. At operation 214c, the network controller 105 transmits one or more messages for configuring forwarding tables of NE 106B of ND 101B to forward the identified flows to ND 101A. At operation 214d one or more messages are transmitted from the network controller 105 to configure NE 106B of ND 101B to forward the identified flows to the ND 101B instead of ND 101A. Thus similarly to the embodiments described in the direct attachment scenario all flows originally forwarded to the ND 101A and handled by the migrating VM 102A are forwarded through an additional hop in the network prior to reaching ND 101A, where the additional hop is the ND towards which the migrating VM is to be copied.

Flow then move to operations 205a and 205b, where the network controller 105 receives a message indicating that the configuration of each of the ND 101B and ND 101C is complete and the two devices are in a ready state with respect to the migration of the VM 102A. Following the receipt of these messages, the network controller 105 transmits, at operation 206, a message including an indication that the VM migration can now be performed. At this point the network components are ready to handle a seamless and hitless migration of the VM 102A from ND 101A to ND 101B without interruption of the traffic for the flows handled by the migrating VM.

At operation 207a upon receipt of the message from the network controller 105 that the network is ready for the VM migration, the cloud orchestrator 103 completes the synchronization of the states of the newly created VM 102B in ND 101B. In some embodiments, the cloud orchestrator 103 may have initiated the copy of the VM 102A to the new VM 102B on ND 101B prior to receiving, in these embodiments, upon receipt of the indication from the network controller 105, the cloud orchestrator 103 completes the synchronization of the states between the VM 102A and VM 102B. In other embodiments, the migration of the VM may have not started yet, and the cloud orchestrator 103 may initiate and complete the VM migration at operation 206. Flow then moves to operation 207b, at which the cloud orchestrator receives a message from the ND 101B indicating that the migration is complete. When the migration is complete, the cloud orchestrator configures the VM 102B to be coupled to the network by connecting to an intermediary network element, which is coupled with the NE 106B.

Following the migration of the VM, the ND 101B detects the new location of the VM 102B. In some embodiments, the controller may proactively probe aliveness of the VM in the new location by transmitting a request, at operation 208a, to determine whether the VM is alive (e.g., the network controller 105 may use ARPing, Ping, or any other probe mechanism). This operation may be performed by transmitting the messages during regular interval following the configuration of the network devices such that the migration of the VM is detected shortly after it occurs.

At operation 208c, as soon as the migration is detected by the network controller by receiving a confirmation at operation 208b, the network controller 105 updates the forwarding tables associated with the previously identified flow in the NE 106B to deliver the packets locally instead of transmitting the packets to ND 101A. These transactions involve a few flow addition/deletion/modifications on the NE 106B. Similarly to the direct attachment scenario, no flow modification is required in the forwarding NDs (e.g., ND 101C0). Thus, while in the direct attachment scenario, the event "port up", which occurs when the VM is connected to the network, triggers the switching in the FF group; in the indirect attachment case additional steps are performed by the network controller after migration of the VM (i.e., the network controller detecting the migration based on ARP and explicitly modifying a single flow in NE 106B to deliver packets to the VM locally). While the switchover is not as quick in the indirect attachment as it is in the direct attachment scenario, the activity is localized to few packet punt events on the NE 106B alone, consequently providing a very quick switchover compared to standard live migration methods.

The operations in the flow diagrams will be described with reference to the exemplary embodiments of the other figures. However, it should be understood that the operations of the flow diagrams can be performed by embodiments of the invention other than those discussed with reference to the other figures, and the embodiments of the invention discussed with reference to these other figures can perform operations different than those discussed with reference to the flow diagrams.

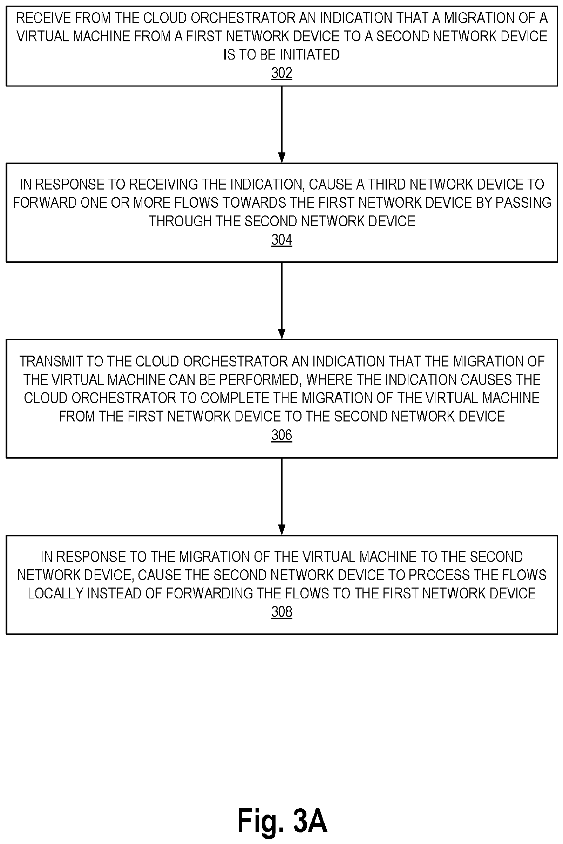

Figure 3A illustrates a flow diagram of exemplary flow operations performed in a network controller of an SDN network for enabling live migration of a virtual machine in accordance with some embodiments. At operation 302, the network controller 105 receives an indication to from the cloud orchestrator 103 that a migration of the VM 102A is to be initiated towards the ND 101B. The indication may be part of a message (e.g., a representational state transfer (REST) application program interface (API) call, or an HTTP message, etc.) transmitted from the cloud orchestrator 103 to the network controller 105.

Flow then moves to operation 304, upon receipt of the indication, the network controller 105 causes the network device 101C to forward the traffic originally destined to the ND 101A towards the ND 101B. Thus, the network controller updates the forwarding states of the network such that all flows routed through the initial route 114 at time T1, prior to the receipt of the indication 111, are routed through the ND 101B prior to reaching ND 101A. The network controller 105 reconfigures the NDs by transmitting one or more control messages 112 to the NDs causing each of the network devices to update forwarding information such that the flows initially forwarded from ND 101C to ND 101A are first forwarded to ND 101B prior to reaching ND 101A. In some embodiments, the network controller may transmit OpenFlow messages for updating the forwarding tables of each of the NDs.

Flow then moves to operation 306, at which the network controller 105 transmits to the cloud orchestrator 103, an indication that the migration of the VM 102A can be performed. The indication 113 may be part of a message (e.g., a REST API call, or an HTTP message, etc.) transmitted from the network controller 105 to the cloud orchestrator 103. The indication causes the cloud orchestrator to complete the migration of the virtual machine from the first network device to the second network device.

Upon receipt of the indication, the cloud orchestrator 103 completes the migration of the VM from ND 101A to ND 101B. In some embodiments, the cloud orchestrator may have initiated the copy of the VM 102A to the new VM 102B on ND 101B prior to receiving the indication, in these embodiments, upon receipt of the indication, the cloud orchestrator 103 completes the synchronization of the states between the VM 102A and VM 102B and couples to the VM 102B to the network by connecting the VM to the NE 106B. In response to the migration of the virtual machine to ND 101B, the network controller causes the second network device to process the flows locally instead of forwarding the flows to ND 101A. Thus, referring back to Figure 1B, once the VM 102B is coupled with the network, it starts processing incoming traffic locally and stops forwarding traffic towards ND 101A causing the flows initially transmitted from ND 101C to the ND 101A to be forwarded through the post-migration route 116 from ND 101C to ND 101B.

The embodiments introduce a temporary additional hop across the cloud computing infrastructure for flows of packets forwarded through the ND hosting the migrating VM (e.g., adding ND 101B in a route for flows of packets between ND 101A and ND 101C).

By adding the temporary hop prior to the migration of the VM, the present embodiments support a seamless and hitless live migration of a virtual machine from a network device to another network device. Contrary to prior approaches, the embodiments enable the live migration of the VM without requiring the use of expensive network controller to perform complex state synchronization. In addition, the configuration of the network during the entire migration process does not require large programming rates. The migration delay is reduced from an order of milliseconds to microseconds. In some embodiments, the solution presented herein can be achieved in an OpenFlow network without the need of establishing any OpenFlow extensions.

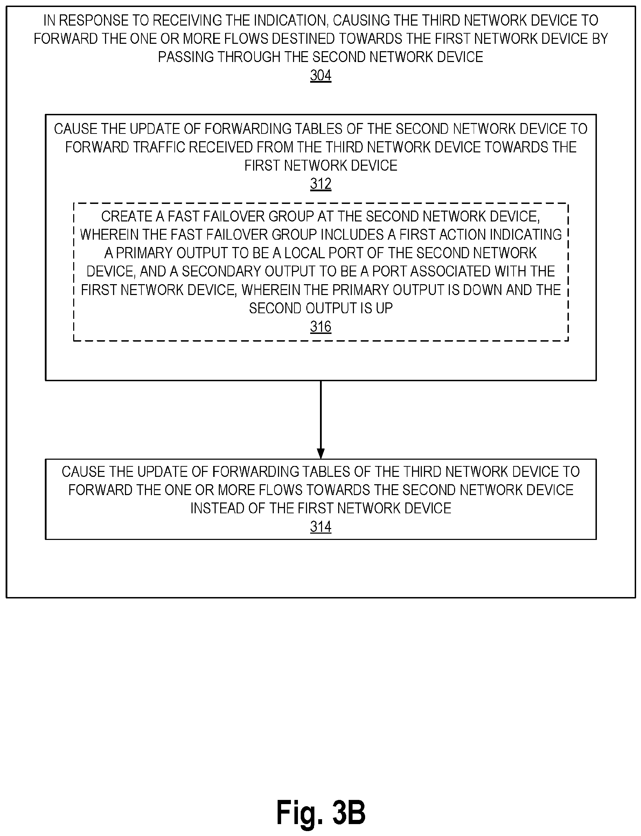

Figure 3B illustrates a flow diagram of detailed operations for causing a network device to forward flows to the network device including the migrating virtual machine by passing through the network device to include the virtual machine following the migration in accordance with some embodiments. At operation 312, the network controller causes the update of forwarding tables of ND 101B for forwarding traffic received from ND 101C towards ND 101A. In one embodiments this may be performed by creating a fast failover group, operation 316, at ND 101B, where the fast failover group includes a first action indicating a primary output to be a local port of the second network device, and a secondary output to be a port associated with the first network device, wherein the primary output is down and the second output is up. Flow then moves to operation 314, at which the network controller causes the update of forwarding tables of ND 101B to forward the one or more flows towards ND 101B instead of ND 101A.

### Architecture:

Figure 4A illustrates connectivity between network devices (NDs) within an exemplary network, as well as three exemplary implementations of the NDs, according to some embodiments of the invention. Figure 4A shows NDs 400A-H, and their connectivity by way of lines between 400A-400B, 400B-400C, 400C-400D, 400D-400E, 400E-400F, 400F-400G, and 400A-400G, as well as between 400H and each of 400A, 400C, 400D, and 400G. These NDs are physical devices, and the connectivity between these NDs can be wireless or wired (often referred to as a link). An additional line extending from NDs 400A, 400E, and 400F illustrates that these NDs act as ingress and egress points for the network (and thus, these NDs are sometimes referred to as edge NDs; while the other NDs may be called core NDs).

Two of the exemplary ND implementations in Figure 4A are: 1) a special-purpose network device 402 that uses custom application-specific integrated-circuits (ASICs) and a special-purpose operating system (OS); and 2) a general purpose network device 404 that uses common off-the-shelf (COTS) processors and a standard OS.

The special-purpose network device 402 includes networking hardware 410 comprising compute resource(s) 412 (which typically include a set of one or more processors), forwarding resource(s) 414 (which typically include one or more ASICs and/or network processors), and physical network interfaces (NIs) 416 (sometimes called physical ports), as well as non-transitory machine readable storage media 418 having stored therein networking software 420. A physical NI is hardware in a ND through which a network connection (e.g., wirelessly through a wireless network interface controller (WNIC) or through plugging in a cable to a physical port connected to a network interface controller (NIC)) is made, such as those shown by the connectivity between NDs 400A-H. During operation, the networking software 420 may be executed by the networking hardware 410 to instantiate a set of one or more networking software instance(s) 422. Each of the networking software instance(s) 422, and that part of the networking hardware 410 that executes that network software instance (be it hardware dedicated to that networking software instance and/or time slices of hardware temporally shared by that networking software instance with others of the networking software instance(s) 422), form a separate virtual network element 430A-R. Each of the virtual network element(s) (VNEs) 430A-R includes a control communication and configuration module 432A-R (sometimes referred to as a local control module or control communication module) and forwarding table(s) 434A-R, such that a given virtual network element (e.g., 430A) includes the control communication and configuration module (e.g., 432A), a set of one or more forwarding table(s) (e.g., 434A), and that portion of the networking hardware 410 that executes the virtual network element (e.g., 430A).

The special-purpose network device 402 is often physically and/or logically considered to include: 1) a ND control plane 424 (sometimes referred to as a control plane) comprising the compute resource(s) 412 that execute the control communication and configuration module(s) 432A-R; and 2) a ND forwarding plane 426 (sometimes referred to as a forwarding plane, a data plane, or a media plane) comprising the forwarding resource(s) 414 that utilize the forwarding table(s) 434A-R and the physical NIs 416. By way of example, where the ND is a router (or is implementing routing functionality), the ND control plane 424 (the compute resource(s) 412 executing the control communication and configuration module(s) 432A-R) is typically responsible for participating in controlling how data (e.g., packets) is to be routed (e.g., the next hop for the data and the outgoing physical NI for that data) and storing that routing information in the forwarding table(s) 434A-R, and the ND forwarding plane 426 is responsible for receiving that data on the physical NIs 416 and forwarding that data out the appropriate ones of the physical NIs 416 based on the forwarding table(s) 434A-R.

Figure 4B illustrates an exemplary way to implement the special-purpose network device 402 according to some embodiments of the invention. Figure 4B shows a special-purpose network device including cards 438 (typically hot pluggable). While in some embodiments the cards 438 are of two types (one or more that operate as the ND forwarding plane 426 (sometimes called line cards), and one or more that operate to implement the ND control plane 424 (sometimes called control cards)), alternative embodiments may combine functionality onto a single card and/or include additional card types (e.g., one additional type of card is called a service card, resource card, or multi-application card). A service card can provide specialized processing (e.g., Layer 4 to Layer 7 services (e.g., firewall, Internet Protocol Security (IPsec), Secure Sockets Layer (SSL) / Transport Layer Security (TLS), Intrusion Detection System (IDS), peer-to-peer (P2P), Voice over IP (VoIP) Session Border Controller, Mobile Wireless Gateways (Gateway General Packet Radio Service (GPRS) Support Node (GGSN), Evolved Packet Core (EPC) Gateway)). By way of example, a service card may be used to terminate IPsec tunnels and execute the attendant authentication and encryption algorithms. These cards are coupled together through one or more interconnect mechanisms illustrated as backplane 436 (e.g., a first full mesh coupling the line cards and a second full mesh coupling all of the cards).

Returning to Figure 4A, the general purpose network device 404 includes hardware 440 comprising a set of one or more processor(s) 442 (which are often COTS processors) and network interface controller(s) 444 (NICs; also known as network interface cards) (which include physical NIs 446), as well as non-transitory machine readable storage media 448 having stored therein software 450. During operation, the processor(s) 442 execute the software 450 to instantiate one or more sets of one or more applications 464A-R. While one embodiment does not implement virtualization, alternative embodiments may use different forms of virtualization. For example, in one such alternative embodiment the virtualization layer 454 represents the kernel of an operating system (or a shim executing on a base operating system) that allows for the creation of multiple instances 462A-R called software containers that may each be used to execute one (or more) of the sets of applications 464A-R; where the multiple software containers (also called virtualization engines, virtual private servers, or jails) are user spaces (typically a virtual memory space) that are separate from each other and separate from the kernel space in which the operating system is run; and where the set of applications running in a given user space, unless explicitly allowed, cannot access the memory of the other processes. In another such alternative embodiment the virtualization layer 454 represents a hypervisor (sometimes referred to as a virtual machine monitor (VMM)) or a hypervisor executing on top of a host operating system, and each of the sets of applications 464A-R is run on top of a guest operating system within an instance 462A-R called a virtual machine (which may in some cases be considered a tightly isolated form of software container) that is run on top of the hypervisor - the guest operating system and application may not know they are running on a virtual machine as opposed to running on a "bare metal" host electronic device, or through para-virtualization the operating system and/or application may be aware of the presence of virtualization for optimization purposes. In yet other alternative embodiments, one, some or all of the applications are implemented as unikernel(s), which can be generated by compiling directly with an application only a limited set of libraries (e.g., from a library operating system (LibOS) including drivers/libraries of OS services) that provide the particular OS services needed by the application. As a unikernel can be implemented to run directly on hardware 440, directly on a hypervisor (in which case the unikernel is sometimes described as running within a LibOS virtual machine), or in a software container, embodiments can be implemented fully with unikernels running directly on a hypervisor represented by virtualization layer 454, unikernels running within software containers represented by instances 462A-R, or as a combination of unikernels and the above-described techniques (e.g., unikernels and virtual machines both run directly on a hypervisor, unikernels and sets of applications that are run in different software containers).

The instantiation of the one or more sets of one or more applications 464A-R, as well as virtualization if implemented, are collectively referred to as software instance(s) 452. In some embodiments, a set of applications 464A-R, corresponding virtualization construct (e.g., instance 462A-R) if implemented, and that part of the hardware 440 that executes them (be it hardware dedicated to that execution and/or time slices of hardware temporally shared), form a separate virtual network element(s) for example one of the elements 460A-R.

A virtual network element performs similar functionality to the virtual network element(s) 430A-R - e.g., similar to the control communication and configuration module(s) 432A and forwarding table(s) 434A (this virtualization of the hardware 440 is sometimes referred to as network function virtualization (NFV)). Thus, NFV may be used to consolidate many network equipment types onto industry standard high volume server hardware, physical switches, and physical storage, which could be located in Data centers, NDs, and customer premise equipment (CPE). While embodiments of the invention are illustrated with each instance 462A-R corresponding to one VNE 460A-R, alternative embodiments may implement this correspondence at a finer level granularity (e.g., line card virtual machines virtualize line cards, control card virtual machine virtualize control cards, applications virtual machines virtualize applications etc.); it should be understood that the techniques described herein with reference to a correspondence of instances 462A-R to VNEs also apply to embodiments where such a finer level of granularity and/or unikernels are used.

In certain embodiments, the virtualization layer 454 includes a virtual switch that provides similar forwarding services as a physical Ethernet switch. Specifically, this virtual switch forwards traffic between instances 462A-R and the NIC(s) 444, as well as optionally between the instances 462A-R; in addition, this virtual switch may enforce network isolation between the VNEs 460A-R that by policy are not permitted to communicate with each other (e.g., by honoring virtual local area networks (VLANs)). For example NE 106A, 106B, and 106C may be virtual switches.

The third exemplary ND implementation in Figure 4A is a hybrid network device 406, which includes both custom ASICs/special-purpose OS and COTS processors/standard OS in a single ND or a single card within an ND. In certain embodiments of such a hybrid network device, a platform VM (i.e., a VM that that implements the functionality of the special-purpose network device 402) could provide for para-virtualization to the networking hardware present in the hybrid network device 406.

Regardless of the above exemplary implementations of an ND, when a single one of multiple VNEs implemented by an ND is being considered (e.g., only one of the VNEs is part of a given virtual network) or where only a single VNE is currently being implemented by an ND, the shortened term network element (NE) is sometimes used to refer to that VNE. Also in all of the above exemplary implementations, each of the VNEs (e.g., VNE(s) 430A-R, VNEs 460A-R, and those in the hybrid network device 406) receives data on the physical NIs (e.g., 416, 446) and forwards that data out the appropriate ones of the physical NIs (e.g., 416, 446). For example, a VNE implementing IP router functionality forwards IP packets on the basis of some of the IP header information in the IP packet; where IP header information includes source IP address, destination IP address, source port, destination port (where "source port" and "destination port" refer herein to protocol ports, as opposed to physical ports of a ND), transport protocol (e.g., user datagram protocol (UDP), Transmission Control Protocol (TCP), and differentiated services code point (DSCP) values.

Figure 4C illustrates various exemplary ways in which VNEs may be coupled according to some embodiments of the invention. Figure 4C shows VNEs 470A.1-470A.P (and optionally VNEs 470A.Q-470A.R) implemented in ND 400A and VNE 470H. 1 in ND 400H. In Figure 4C, VNEs 470A.1-P are separate from each other in the sense that they can receive packets from outside ND 400A and forward packets outside of ND 400A; VNE 470A. 1 is coupled with VNE 470H.1, and thus they communicate packets between their respective NDs; VNE 470A.2-470A.3 may optionally forward packets between themselves without forwarding them outside of the ND 400A; and VNE 470A.P may optionally be the first in a chain of VNEs that includes VNE 470A.Q followed by VNE 470A.R (this is sometimes referred to as dynamic service chaining, where each of the VNEs in the series of VNEs provides a different service - e.g., one or more layer 4-7 network services). While Figure 4C illustrates various exemplary relationships between the VNEs, alternative embodiments may support other relationships (e.g., more/fewer VNEs, more/fewer dynamic service chains, multiple different dynamic service chains with some common VNEs and some different VNEs).

The NDs of Figure 4A, for example, may form part of the Internet or a private network; and other electronic devices (not shown; such as end user devices including workstations, laptops, netbooks, tablets, palm tops, mobile phones, smartphones, phablets, multimedia phones, Voice Over Internet Protocol (VOIP) phones, terminals, portable media players, GPS units, wearable devices, gaming systems, set-top boxes, Internet enabled household appliances) may be coupled to the network (directly or through other networks such as access networks) to communicate over the network (e.g., the Internet or virtual private networks (VPNs) overlaid on (e.g., tunneled through) the Internet) with each other (directly or through servers) and/or access content and/or services. Such content and/or services are typically provided by one or more servers (not shown) belonging to a service/content provider or one or more end user devices (not shown) participating in a peer-to-peer (P2P) service, and may include, for example, public webpages (e.g., free content, store fronts, search services), private webpages (e.g., username/password accessed webpages providing email services), and/or corporate networks over VPNs. For instance, end user devices may be coupled (e.g., through customer premise equipment coupled to an access network (wired or wirelessly)) to edge NDs, which are coupled (e.g., through one or more core NDs) to other edge NDs, which are coupled to electronic devices acting as servers. However, through compute and storage virtualization, one or more of the electronic devices operating as the NDs in Figure 4A may also host one or more such servers (e.g., in the case of the general purpose network device 404, one or more of the software instances 462A-R may operate as servers; the same would be true for the hybrid network device 406; in the case of the special-purpose network device 402, one or more such servers could also be run on a virtualization layer executed by the compute resource(s) 412); in which case the servers are said to be co-located with the VNEs of that ND.

A virtual network is a logical abstraction of a physical network (such as that in Figure 4A) that provides network services (e.g., L2 and/or L3 services). A virtual network can be implemented as an overlay network (sometimes referred to as a network virtualization overlay) that provides network services (e.g., layer 2 (L2, data link layer) and/or layer 3 (L3, network layer) services) over an underlay network (e.g., an L3 network, such as an Internet Protocol (IP) network that uses tunnels (e.g., generic routing encapsulation (GRE), layer 2 tunneling protocol (L2TP), IPSec) to create the overlay network).

A network virtualization edge (NVE) sits at the edge of the underlay network and participates in implementing the network virtualization; the network-facing side of the NVE uses the underlay network to tunnel frames to and from other NVEs; the outward-facing side of the NVE sends and receives data to and from systems outside the network. A virtual network instance (VNI) is a specific instance of a virtual network on a NVE (e.g., a NE/VNE on an ND, a part of a NE/VNE on a ND where that NE/VNE is divided into multiple VNEs through emulation); one or more VNIs can be instantiated on an NVE (e.g., as different VNEs on an ND). A virtual access point (VAP) is a logical connection point on the NVE for connecting external systems to a virtual network; a VAP can be physical or virtual ports identified through logical interface identifiers (e.g., a VLAN ID).

Examples of network services include: 1) an Ethernet LAN emulation service (an Ethernet-based multipoint service similar to an Internet Engineering Task Force (IETF) Multiprotocol Label Switching (MPLS) or Ethernet VPN (EVPN) service) in which external systems are interconnected across the network by a LAN environment over the underlay network (e.g., an NVE provides separate L2 VNIs (virtual switching instances) for different such virtual networks, and L3 (e.g., IP/MPLS) tunneling encapsulation across the underlay network); and 2) a virtualized IP forwarding service (similar to IETF IP VPN (e.g., Border Gateway Protocol (BGP)/MPLS IPVPN) from a service definition perspective) in which external systems are interconnected across the network by an L3 environment over the underlay network (e.g., an NVE provides separate L3 VNIs (forwarding and routing instances) for different such virtual networks, and L3 (e.g., IP/MPLS) tunneling encapsulation across the underlay network)). Network services may also include quality of service capabilities (e.g., traffic classification marking, traffic conditioning and scheduling), security capabilities (e.g., filters to protect customer premises from network - originated attacks, to avoid malformed route announcements), and management capabilities (e.g., full detection and processing).

Fig. 4D illustrates a network with a single network element on each of the NDs of Figure 4A, and within this straight forward approach contrasts a traditional distributed approach (commonly used by traditional routers) with a centralized approach for maintaining reachability and forwarding information (also called network control), according to some embodiments of the invention. Specifically, Figure 4D illustrates network elements (NEs) 470A-H with the same connectivity as the NDs 400A-H of Figure 4A.

Figure 4D illustrates that the distributed approach 472 distributes responsibility for generating the reachability and forwarding information across the NEs 470A-H; in other words, the process of neighbor discovery and topology discovery is distributed.

For example, where the special-purpose network device 402 is used, the control communication and configuration module(s) 432A-R of the ND control plane 424 typically include a reachability and forwarding information module to implement one or more routing protocols (e.g., an exterior gateway protocol such as Border Gateway Protocol (BGP), Interior Gateway Protocol(s) (IGP) (e.g., Open Shortest Path First (OSPF), Intermediate System to Intermediate System (IS-IS), Routing Information Protocol (RIP), Label Distribution Protocol (LDP), Resource Reservation Protocol (RSVP) (including RSVP-Traffic Engineering (TE): Extensions to RSVP for LSP Tunnels and Generalized Multi-Protocol Label Switching (GMPLS) Signaling RSVP-TE)) that communicate with other NEs to exchange routes, and then selects those routes based on one or more routing metrics. Thus, the NEs 470A-H (e.g., the compute resource(s) 412 executing the control communication and configuration module(s) 432A-R) perform their responsibility for participating in controlling how data (e.g., packets) is to be routed (e.g., the next hop for the data and the outgoing physical NI for that data) by distributively determining the reachability within the network and calculating their respective forwarding information. Routes and adjacencies are stored in one or more routing structures (e.g., Routing Information Base (RIB), Label Information Base (LIB), one or more adjacency structures) on the ND control plane 424. The ND control plane 424 programs the ND forwarding plane 426 with information (e.g., adjacency and route information) based on the routing structure(s). For example, the ND control plane 424 programs the adjacency and route information into one or more forwarding table(s) 434A-R (e.g., Forwarding Information Base (FIB), Label Forwarding Information Base (LFIB), and one or more adjacency structures) on the ND forwarding plane 426. For layer 2 forwarding, the ND can store one or more bridging tables that are used to forward data based on the layer 2 information in that data. While the above example uses the special-purpose network device 402, the same distributed approach 472 can be implemented on the general purpose network device 404 and the hybrid network device 406.

Figure 4D illustrates that a centralized approach 474 (also known as software defined networking (SDN)) that decouples the system that makes decisions about where traffic is sent from the underlying systems that forwards traffic to the selected destination. The illustrated centralized approach 474 has the responsibility for the generation of reachability and forwarding information in a centralized control plane 476 (sometimes referred to as a SDN control module, controller, network controller, OpenFlow controller, SDN controller, control plane node, network virtualization authority, or management control entity), and thus the process of neighbor discovery and topology discovery is centralized. The centralized control plane 476 has a south bound interface 482 with a data plane 480 (sometime referred to the infrastructure layer, network forwarding plane, or forwarding plane (which should not be confused with a ND forwarding plane)) that includes the NEs 470A-H (sometimes referred to as switches, forwarding elements, data plane elements, or nodes). The centralized control plane 476 includes a network controller 478, which includes a centralized reachability and forwarding information module 479 that determines the reachability within the network and distributes the forwarding information to the NEs 470A-H of the data plane 480 over the south bound interface 482 (which may use the OpenFlow protocol). Thus, the network intelligence is centralized in the centralized control plane 476 executing on electronic devices that are typically separate from the NDs.

For example, where the special-purpose network device 402 is used in the data plane 480, each of the control communication and configuration module(s) 432A-R of the ND control plane 424 typically include a control agent that provides the VNE side of the south bound interface 482. In this case, the ND control plane 424 (the compute resource(s) 412 executing the control communication and configuration module(s) 432A-R) performs its responsibility for participating in controlling how data (e.g., packets) is to be routed (e.g., the next hop for the data and the outgoing physical NI for that data) through the control agent communicating with the centralized control plane 476 to receive the forwarding information (and in some cases, the reachability information) from the centralized reachability and forwarding information module 479 (it should be understood that in some embodiments of the invention, the control communication and configuration module(s) 432A-R, in addition to communicating with the centralized control plane 476, may also play some role in determining reachability and/or calculating forwarding information - albeit less so than in the case of a distributed approach; such embodiments are generally considered to fall under the centralized approach 474, but may also be considered a hybrid approach).

While the above example uses the special-purpose network device 402, the same centralized approach 474 can be implemented with the general purpose network device 404 (e.g., each of the VNE 460A-R performs its responsibility for controlling how data (e.g., packets) is to be routed (e.g., the next hop for the data and the outgoing physical NI for that data) by communicating with the centralized control plane 476 to receive the forwarding information (and in some cases, the reachability information) from the centralized reachability and forwarding information module 479; it should be understood that in some embodiments of the invention, the VNEs 460A-R, in addition to communicating with the centralized control plane 476, may also play some role in determining reachability and/or calculating forwarding information - albeit less so than in the case of a distributed approach) and the hybrid network device 406. In fact, the use of SDN techniques can enhance the NFV techniques typically used in the general purpose network device 404 or hybrid network device 406 implementations as NFV is able to support SDN by providing an infrastructure upon which the SDN software can be run, and NFV and SDN both aim to make use of commodity server hardware and physical switches.

Figure 4D also shows that the centralized control plane 476 has a north bound interface 484 to an application layer 486, in which resides application(s) 488. The centralized control plane 476 has the ability to form virtual networks 492 (sometimes referred to as a logical forwarding plane, network services, or overlay networks (with the NEs 470A-H of the data plane 480 being the underlay network)) for the application(s) 488. Thus, the centralized control plane 476 maintains a global view of all NDs and configured NEs/VNEs, and it maps the virtual networks to the underlying NDs efficiently (including maintaining these mappings as the physical network changes either through hardware (ND, link, or ND component) failure, addition, or removal).

While Figure 4D shows the distributed approach 472 separate from the centralized approach 474, the effort of network control may be distributed differently or the two combined in certain embodiments of the invention. For example: 1) embodiments may generally use the centralized approach (SDN) 474, but have certain functions delegated to the NEs (e.g., the distributed approach may be used to implement one or more of fault monitoring, performance monitoring, protection switching, and primitives for neighbor and/or topology discovery); or 2) embodiments of the invention may perform neighbor discovery and topology discovery via both the centralized control plane and the distributed protocols, and the results compared to raise exceptions where they do not agree. Such embodiments are generally considered to fall under the centralized approach 474, but may also be considered a hybrid approach.

While Figure 4D illustrates the simple case where each of the NDs 400A-H implements a single NE 470A-H, it should be understood that the network control approaches described with reference to Figure 4D also work for networks where one or more of the NDs 400A-H implement multiple VNEs (e.g., VNEs 430A-R, VNEs 460A-R, those in the hybrid network device 406). Alternatively or in addition, the network controller 478 may also emulate the implementation of multiple VNEs in a single ND. Specifically, instead of (or in addition to) implementing multiple VNEs in a single ND, the network controller 478 may present the implementation of a VNE/NE in a single ND as multiple VNEs in the virtual networks 492 (all in the same one of the virtual network(s) 492, each in different ones of the virtual network(s) 492, or some combination). For example, the network controller 478 may cause an ND to implement a single VNE (a NE) in the underlay network, and then logically divide up the resources of that NE within the centralized control plane 476 to present different VNEs in the virtual network(s) 492 (where these different VNEs in the overlay networks are sharing the resources of the single VNE/NE implementation on the ND in the underlay network).

On the other hand, Figures 4E and 4F respectively illustrate exemplary abstractions of NEs and VNEs that the network controller 478 may present as part of different ones of the virtual networks 492. Figure 4E illustrates the simple case of where each of the NDs 400A-H implements a single NE 470A-H (see Figure 4D), but the centralized control plane 476 has abstracted multiple of the NEs in different NDs (the NEs 470A-C and G-H) into (to represent) a single NE 4701 in one of the virtual network(s) 492 of Figure 4D, according to some embodiments of the invention. Figure 4E shows that in this virtual network, the NE 4701 is coupled to NE 470D and 470F, which are both still coupled to NE 470E.

Figure 4F illustrates a case where multiple VNEs (VNE 470A.1 and VNE 470H.1) are implemented on different NDs (ND 400A and ND 400H) and are coupled to each other, and where the centralized control plane 476 has abstracted these multiple VNEs such that they appear as a single VNE 470T within one of the virtual networks 492 of Figure 4D, according to some embodiments of the invention. Thus, the abstraction of a NE or VNE can span multiple NDs.

While some embodiments of the invention implement the centralized control plane 476 as a single entity (e.g., a single instance of software running on a single electronic device), alternative embodiments may spread the functionality across multiple entities for redundancy and/or scalability purposes (e.g., multiple instances of software running on different electronic devices).

Similar to the network device implementations, the electronic device(s) running the centralized control plane 476, and thus the network controller 478 including the centralized reachability and forwarding information module 479, may be implemented a variety of ways (e.g., a special purpose device, a general-purpose (e.g., COTS) device, or hybrid device). These electronic device(s) would similarly include compute resource(s), a set or one or more physical NICs, and a non-transitory machine-readable storage medium having stored thereon the centralized control plane software. For instance, Figure 5 illustrates, a general purpose control plane device 504 including hardware 540 comprising a set of one or more processor(s) 542 (which are often COTS processors) and network interface controller(s) 544 (NICs; also known as network interface cards) (which include physical NIs 546), as well as non-transitory machine readable storage media 548 having stored therein centralized control plane (CCP) software 550.

In embodiments that use compute virtualization, the processor(s) 542 typically execute software to instantiate a virtualization layer 554 (e.g., in one embodiment the virtualization layer 554 represents the kernel of an operating system (or a shim executing on a base operating system) that allows for the creation of multiple instances 562A-R called software containers (representing separate user spaces and also called virtualization engines, virtual private servers, or jails) that may each be used to execute a set of one or more applications; in another embodiment the virtualization layer 554 represents a hypervisor (sometimes referred to as a virtual machine monitor (VMM)) or a hypervisor executing on top of a host operating system, and an application is run on top of a guest operating system within an instance 562A-R called a virtual machine (which in some cases may be considered a tightly isolated form of software container) that is run by the hypervisor ; in another embodiment, an application is implemented as a unikernel, which can be generated by compiling directly with an application only a limited set of libraries (e.g., from a library operating system (LibOS) including drivers/libraries of OS services) that provide the particular OS services needed by the application, and the unikernel can run directly on hardware 540, directly on a hypervisor represented by virtualization layer 554 (in which case the unikernel is sometimes described as running within a LibOS virtual machine), or in a software container represented by one of instances 562A-R). Again, in embodiments where compute virtualization is used, during operation an instance of the CCP software 550 (illustrated as CCP instance 576A) is executed (e.g., within the instance 562A) on the virtualization layer 554. In embodiments where compute virtualization is not used, the CCP instance 576A is executed, as a unikernel or on top of a host operating system, on the "bare metal" general purpose control plane device 504. The instantiation of the CCP instance 576A, as well as the virtualization layer 554 and instances 562A-R if implemented, are collectively referred to as software instance(s) 552.

In some embodiments, the CCP instance 576A includes a network controller instance 578. The network controller instance 578 includes a centralized reachability and forwarding information module instance 579 (which is a middleware layer providing the context of the network controller 478 to the operating system and communicating with the various NEs), and an CCP application layer 580 (sometimes referred to as an application layer) over the middleware layer (providing the intelligence required for various network operations such as protocols, network situational awareness, and user - interfaces). At a more abstract level, this CCP application layer 580 within the centralized control plane 476 works with virtual network view(s) (logical view(s) of the network) and the middleware layer provides the conversion from the virtual networks to the physical view. The network controller instance includes a Cloud Orchestrator Communication Unit 581and Virtual Machine Migration Coordinator 582 which are operative to perform the operations described with reference to Figures 1A-3B.

The centralized control plane 476 transmits relevant messages to the data plane 480 based on CCP application layer 580 calculations and middleware layer mapping for each flow. A flow may be defined as a set of packets whose headers match a given pattern of bits; in this sense, traditional IP forwarding is also flow-based forwarding where the flows are defined by the destination IP address for example; however, in other implementations, the given pattern of bits used for a flow definition may include more fields (e.g., 10 or more) in the packet headers. Different NDs/NEs/VNEs of the data plane 480 may receive different messages, and thus different forwarding information. The data plane 480 processes these messages and programs the appropriate flow information and corresponding actions in the forwarding tables (sometime referred to as flow tables) of the appropriate NE/VNEs, and then the NEs/VNEs map incoming packets to flows represented in the forwarding tables and forward packets based on the matches in the forwarding tables.

Standards such as OpenFlow define the protocols used for the messages, as well as a model for processing the packets. The model for processing packets includes header parsing, packet classification, and making forwarding decisions. Header parsing describes how to interpret a packet based upon a well-known set of protocols. Some protocol fields are used to build a match structure (or key) that will be used in packet classification (e.g., a first key field could be a source media access control (MAC) address, and a second key field could be a destination MAC address).

Packet classification involves executing a lookup in memory to classify the packet by determining which entry (also referred to as a forwarding table entry or flow entry) in the forwarding tables best matches the packet based upon the match structure, or key, of the forwarding table entries. It is possible that many flows represented in the forwarding table entries can correspond/match to a packet; in this case the system is typically configured to determine one forwarding table entry from the many according to a defined scheme (e.g., selecting a first forwarding table entry that is matched). Forwarding table entries include both a specific set of match criteria (a set of values or wildcards, or an indication of what portions of a packet should be compared to a particular value/values/wildcards, as defined by the matching capabilities - for specific fields in the packet header, or for some other packet content), and a set of one or more actions for the data plane to take on receiving a matching packet. For example, an action may be to push a header onto the packet, for the packet using a particular port, flood the packet, or simply drop the packet. Thus, a forwarding table entry for IPv4/IPv6 packets with a particular transmission control protocol (TCP) destination port could contain an action specifying that these packets should be dropped.

Making forwarding decisions and performing actions occurs, based upon the forwarding table entry identified during packet classification, by executing the set of actions identified in the matched forwarding table entry on the packet.

However, when an unknown packet (for example, a "missed packet" or a "match-miss" as used in OpenFlow parlance) arrives at the data plane 480, the packet (or a subset of the packet header and content) is typically forwarded to the centralized control plane 476. The centralized control plane 476 will then program forwarding table entries into the data plane 480 to accommodate packets belonging to the flow of the unknown packet. Once a specific forwarding table entry has been programmed into the data plane 480 by the centralized control plane 476, the next packet with matching credentials will match that forwarding table entry and take the set of actions associated with that matched entry.

A network interface (NI) may be physical or virtual; and in the context of IP, an interface address is an IP address assigned to a NI, be it a physical NI or virtual NI. A virtual NI may be associated with a physical NI, with another virtual interface, or stand on its own (e.g., a loopback interface, a point-to-point protocol interface). A NI (physical or virtual) may be numbered (a NI with an IP address) or unnumbered (a NI without an IP address). A loopback interface (and its loopback address) is a specific type of virtual NI (and IP address) of a NE/VNE (physical or virtual) often used for management purposes; where such an IP address is referred to as the nodal loopback address. The IP address(es) assigned to the NI(s) of a ND are referred to as IP addresses of that ND; at a more granular level, the IP address(es) assigned to NI(s) assigned to a NE/VNE implemented on a ND can be referred to as IP addresses of that NE/VNE.

Next hop selection by the routing system for a given destination may resolve to one path (that is, a routing protocol may generate one next hop on a shortest path); but if the routing system determines there are multiple viable next hops (that is, the routing protocol generated forwarding solution offers more than one next hop on a shortest path - multiple equal cost next hops), some additional criteria is used - for instance, in a connectionless network, Equal Cost Multi Path (ECMP) (also known as Equal Cost Multi Pathing, multipath forwarding and IP multipath) may be used (e.g., typical implementations use as the criteria particular header fields to ensure that the packets of a particular packet flow are always forwarded on the same next hop to preserve packet flow ordering). For purposes of multipath forwarding, a packet flow is defined as a set of packets that share an ordering constraint. As an example, the set of packets in a particular TCP transfer sequence need to arrive in order, else the TCP logic will interpret the out of order delivery as congestion and slow the TCP transfer rate down.

Some NDs include functionality for authentication, authorization, and accounting (AAA) protocols (e.g., RADIUS (Remote Authentication Dial-In User Service), Diameter, and/or TACACS+ (Terminal Access Controller Access Control System Plus). AAA can be provided through a client/server model, where the AAA client is implemented on a ND and the AAA server can be implemented either locally on the ND or on a remote electronic device coupled with the ND. Authentication is the process of identifying and verifying a subscriber. For instance, a subscriber might be identified by a combination of a username and a password or through a unique key. Authorization determines what a subscriber can do after being authenticated, such as gaining access to certain electronic device information resources (e.g., through the use of access control policies). Accounting is recording user activity. By way of a summary example, end user devices may be coupled (e.g., through an access network) through an edge ND (supporting AAA processing) coupled to core NDs coupled to electronic devices implementing servers of service/content providers. AAA processing is performed to identify for a subscriber the subscriber record stored in the AAA server for that subscriber. A subscriber record includes a set of attributes (e.g., subscriber name, password, authentication information, access control information, rate-limiting information, policing information) used during processing of that subscriber's traffic.

Certain NDs (e.g., certain edge NDs) internally represent end user devices (or sometimes customer premise equipment (CPE) such as a residential gateway (e.g., a router, modem)) using subscriber circuits. A subscriber circuit uniquely identifies within the ND a subscriber session and typically exists for the lifetime of the session. Thus, a ND typically allocates a subscriber circuit when the subscriber connects to that ND, and correspondingly de-allocates that subscriber circuit when that subscriber disconnects. Each subscriber session represents a distinguishable flow of packets communicated between the ND and an end user device (or sometimes CPE such as a residential gateway or modem) using a protocol, such as the point-to-point protocol over another protocol (PPPoX) (e.g., where X is Ethernet or Asynchronous Transfer Mode (ATM)), Ethernet, 802.1Q Virtual LAN (VLAN), Internet Protocol, or ATM). A subscriber session can be initiated using a variety of mechanisms (e.g., manual provisioning a dynamic host configuration protocol (DHCP), DHCP/client-less internet protocol service (CLIPS) or Media Access Control (MAC) address tracking). For example, the point-to-point protocol (PPP) is commonly used for digital subscriber line (DSL) services and requires installation of a PPP client that enables the subscriber to enter a username and a password, which in turn may be used to select a subscriber record. When DHCP is used (e.g., for cable modem services), a username typically is not provided; but in such situations other information (e.g., information that includes the MAC address of the hardware in the end user device (or CPE)) is provided. The use of DHCP and CLIPS on the ND captures the MAC addresses and uses these addresses to distinguish subscribers and access their subscriber records.

Each VNE (e.g., a virtual router, a virtual bridge (which may act as a virtual switch instance in a Virtual Private LAN Service (VPLS) is typically independently administrable. For example, in the case of multiple virtual routers, each of the virtual routers may share system resources but is separate from the other virtual routers regarding its management domain, AAA (authentication, authorization, and accounting) name space, IP address, and routing database(s). Multiple VNEs may be employed in an edge ND to provide direct network access and/or different classes of services for subscribers of service and/or content providers.

Within certain NDs, "interfaces" that are independent of physical NIs may be configured as part of the VNEs to provide higher-layer protocol and service information (e.g., Layer 3 addressing). The subscriber records in the AAA server identify, in addition to the other subscriber configuration requirements, to which context (e.g., which of the VNEs/NEs) the corresponding subscribers should be bound within the ND. As used herein, a binding forms an association between a physical entity (e.g., physical NI, channel) or a logical entity (e.g., circuit such as a subscriber circuit or logical circuit (a set of one or more subscriber circuits)) and a context's interface over which network protocols (e.g., routing protocols, bridging protocols) are configured for that context. Subscriber data flows on the physical entity when some higher-layer protocol interface is configured and associated with that physical entity.

Some NDs provide support for implementing VPNs (Virtual Private Networks) (e.g., Layer 2 VPNs and/or Layer 3 VPNs). For example, the ND where a provider's network and a customer's network are coupled are respectively referred to as PEs (Provider Edge) and CEs (Customer Edge). In a Layer 2 VPN, forwarding typically is performed on the CE(s) on either end of the VPN and traffic is sent across the network (e.g., through one or more PEs coupled by other NDs). Layer 2 circuits are configured between the CEs and PEs (e.g., an Ethernet port, an ATM permanent virtual circuit (PVC), a Frame Relay PVC). In a Layer 3 VPN, routing typically is performed by the PEs. By way of example, an edge ND that supports multiple VNEs may be deployed as a PE; and a VNE may be configured with a VPN protocol, and thus that VNE is referred as a VPN VNE.

Some NDs provide support for VPLS (Virtual Private LAN Service). For example, in a VPLS network, end user devices access content/services provided through the VPLS network by coupling to CEs, which are coupled through PEs coupled by other NDs. VPLS networks can be used for implementing triple play network applications (e.g., data applications (e.g., high-speed Internet access), video applications (e.g., television service such as IPTV (Internet Protocol Television), VoD (Video-on-Demand) service), and voice applications (e.g., VoIP (Voice over Internet Protocol) service)), VPN services, etc. VPLS is a type of layer 2 VPN that can be used for multi-point connectivity. VPLS networks also allow end use devices that are coupled with CEs at separate geographical locations to communicate with each other across a Wide Area Network (WAN) as if they were directly attached to each other in a Local Area Network (LAN) (referred to as an emulated LAN).

For example, while the flow diagrams in the figures show a particular order of operations performed by certain embodiments of the invention, it should be understood that such order is exemplary (e.g., alternative embodiments may perform the operations in a different order, combine certain operations, overlap certain operations, etc.).

While the invention has been described in terms of several embodiments, those skilled in the art will recognize that the invention is not limited to the embodiments described, can be practiced with modification and alteration within the scope of the appended claims. The description is thus to be regarded as illustrative instead of limiting.

## Claims

1. A method in a software-defined networking, SDN, controller (105) that is communicatively coupled with a cloud orchestrator (103), of enabling a live migration of a virtual machine from a first network device (101A) to a second network device (101B), wherein the virtual machine processes one or more flows received at the first network device (101A) from a third network device (101C), the method comprising:
receiving (302) from the cloud orchestrator 103 an indication (111) that migration of the virtual machine from the first network device (101A) to the second network device (101B) is to be initiated;
in response to receiving the indication, causing (304) the third network device (101C) to forward the one or more flows towards the first network device by passing through the second network device (101B);
transmitting (306) to the cloud orchestrator (103) an indication (113) that the migration of the virtual machine can be performed, wherein the indication causes the cloud orchestrator (103) to complete the migration of the virtual machine from the first network device (101A) to the second network device (101B); and
in response to the migration of the virtual machine to the second network device (101B), causing (308) the second network device (101B) to process the one or more flows locally instead of forwarding the one or more flows to the first network device (101A).

2. The method of claim 1, wherein causing (304) the third network device (101C) to forward the one or more flows includes performing the following operations:
causing (312) an update of forwarding tables of the second network device (101B) to forward traffic received from the third network device 101C towards the first network device; and
causing (314) an update of forwarding tables of the third network device (101C) to forward the one or more flows towards the second network device (101B) instead of the first network device (101A).

3. The method of claim 2, wherein causing the update of the forwarding tables of the second network device (101B) includes creating (316) a fast failover group at the second network device (101B), wherein the fast failover group includes a first action indicating a primary output to be a local port of the second network device (101B), and a secondary output to be a port associated with the first network device, wherein the primary output is down and the second output is up.

4. The method of claim 3, wherein causing the second network device (101B) to process the one or more flows locally instead of forwarding the one or more flows to the first network device (101A) includes:
detecting that the primary output is up; and
causing the second network device (101B) to output the one or more flows to the local port of the second network device (101B).

5. The method of claim 1, wherein the method further comprises transmitting (208a) one or more messages to the second network device (101B) to determine whether the migration of the virtual machine has been completed.

6. The method of claim 5, wherein the method further comprises:
receiving (208b) from the second network device (101B) an indication that the migration of the virtual machine is complete; and
in response to determining that the migration is complete, transmitting (208c) a message to the second network device (101B) causing the second network device (101B) to output the one or more flows locally instead of forwarding the one or more flows to the first network device (101A).

7. A software-defined networking, SDN, controller to be communicatively coupled with a cloud orchestrator 103, for enabling live migration of a virtual machine from a first network device (101A) to a second network device (101B), wherein the first network device (101A) receives one or more flows from a third network device (101C), the SDN controller comprising:
a non-transitory computer readable medium to store instructions; and
a processor coupled with the non-transitory computer readable medium to process the stored instructions to:
receive (302) from the cloud orchestrator (103) an indication (111) that migration of the virtual machine from the first network device (101A) to the second network device (101B) is to be initiated;
in response to receiving the indication, cause (304) the third network device (101C) to forward the one or more flows towards the first network device (101A) by passing through the second network device (101B);
transmit (306) to the cloud orchestrator (103) an indication (113) that the migration of the virtual machine can be performed, wherein the indication causes the cloud orchestrator (103) to complete the migration of the virtual machine from the first network device (101A) to the second network device (101B); and
in response to the migration of the virtual machine to the second network device (101B), cause (308) the second network device (101B) to process the one or more flows locally instead of forwarding the one or more flows to the first network device.

8. The SDN controller of claim 7, wherein to cause the third network device 101C to forward the one or more flows includes:
to cause (312) an update of forwarding tables of the second network device (101B) to forward traffic received from the third network device (101C) towards the first network device (101A); and
to cause (314) an update of forwarding tables of the third network device (101C) to forward the one or more flows towards the second network device (101B) instead of the first network device (101A).

9. The SDN controller of claim 8, wherein to cause (312) the update of the forwarding tables of the second network device (101B) includes creating (316) a fast failover group at the second network device (101B), wherein the fast failover group includes a first action indicating a primary output to be a local port of the second network device (101B), and a secondary output to be a port associated with the first network device (101A), wherein the primary output is down and the second output is up.

10. The SDN controller of claim 9, wherein to cause the second network device (101B) to process the one or more flows locally instead of forwarding the one or more flows to the first network device (101A) includes to:
detect that the primary output is up; and
cause the second network device (101B) to output the one or more flows to the local port of the second network device (101B).

11. The SDN controller of claim 7, wherein the processor is further to transmit (208a) one or more messages to the second network device (101B) to determine whether the migration of the virtual machine has been completed.

12. The SDN controller of claim 11, wherein the processor is further to rec
eive (208b) from the second network device (101B) an indication that the migration of the virtual machine is complete; and
in response to determining that the migration is complete, transmit a message to the second network device (101B) causing (208c) the second network device (101B) to output the one or more flows locally instead of forwarding the one or more flows to the first network device (101A).

13. A non-transitory computer readable storage medium storing instructions which when executed by a processor of a software-defined networking, SDN, controller to be communicatively coupled with a cloud orchestrator (103), causes the SDN controller to perform operations for enabling live migration of a virtual machine from a first network device (101A) to a second network device (101B), wherein the first network device (101A) receives one or more flows from a third network device (101C), the operations comprising:
receiving (302) from the cloud orchestrator (103) an indication (111) that migration of the virtual machine from the first network device (101A) to the second network device (101B) is to be initiated;
in response to receiving the indication, causing (304) the third network device 101C to forward the one or more flows towards the first network device (101A) by passing through the second network device (101B);
transmitting (306) to the cloud orchestrator (103) an indication (113) that the migration of the virtual machine can be performed, wherein the indication causes the cloud orchestrator (103) to complete the migration of the virtual machine from the first network device (101A) to the second network device (101B); and
in response to the migration of the virtual machine to the second network device (101B), causing (308) the second network device (101B) to process the one or more flows locally instead of forwarding the one or more flows to the first network device.

14. The non-transitory computer readable storage medium of claim 13, wherein causing the third network device (101C) to forward the one or more flows includes performing the following operations:
causing (312) an update of forwarding tables of the second network device (101B) to forward traffic received from the third network device (101C) towards the first network device; and
causing (314) an update of forwarding tables of the third network device (101C) to forward the one or more flows towards the second network device (101B) instead of the first network device.

15. The non-transitory computer readable storage medium of claim 14, wherein causing the (312) update of the forwarding tables of the second network device (101B) includes creating (316) a fast failover group at the second network device (101B), wherein the fast failover group includes a first action indicating a primary output to be a local port of the second network device (101B), and a secondary output to be a port associated with the first network device (101A), wherein the primary output is down and the second output is up.

16. The non-transitory computer readable storage medium of claim 15, wherein causing the second network device (101B) to process the one or more flows locally instead of forwarding the one or more flows to the first network device (101A) includes:
detecting that the primary output is up; and
causing the second network device (101B) to output the one or more flows to the local port of the second network device (101B).

17. The non-transitory computer readable storage medium of claim 13, wherein the operations further comprise transmitting (208a) one or more messages to the second network device (101B) to determine whether the migration of the virtual machine has been completed.

18. The non-transitory computer readable storage medium of claim 17, wherein the operations further comprise:
receiving (208b) from the second network device (101B) an indication that the migration of the virtual machine is complete; and
in response to determining that the migration is complete, transmitting (208c) a message to the second network device (101B) causing the second network device (101B) to output the one or more flows locally instead of forwarding the one or more flows to the first network device (101A).

## Patentansprüche

1. Verfahren in einem softwaredefinierten Netzwerk (SDN) - Controller (105), der kommunikativ mit einem Cloud-Orchestrator (103) gekoppelt ist, zur Ermöglichung einer Live-Migration einer virtuellen Maschine von einer ersten Netzwerkvorrichtung (101A) zu einer zweiten Netzwerkvorrichtung (101B), wobei die virtuelle Maschine einen oder mehrere Ströme verarbeitet, die an der ersten Netzwerkvorrichtung (101A) von einer dritten Netzwerkvorrichtung (101C) empfangen werden, wobei das Verfahren Folgendes umfasst:
Empfangen (302) einer Angabe (111) von dem Cloud-Orchestrator 103, dass die Migration der virtuellen Maschine von der ersten Netzwerkvorrichtung (101A) zu der zweiten Netzwerkvorrichtung (101B) eingeleitet werden soll;
als Reaktion auf den Empfang der Angabe, Veranlassen (304), dass die dritte Netzwerkvorrichtung (101C) den einen oder die mehreren Ströme zu der ersten Netzwerkvorrichtung weiterleitet, indem er/sie die zweite Netzwerkvorrichtung (101B) durchläuft/durchlaufen;
Übertragen (306) einer Angabe (113) an den Cloud-Orchestrator (103), dass die Migration der virtuellen Maschine durchgeführt werden kann, wobei die Angabe den Cloud-Orchestrator (103) veranlasst, die Migration der virtuellen Maschine von der ersten Netzwerkvorrichtung (101A) zu der zweiten Netzwerkvorrichtung (101B) abzuschließen; und
als Reaktion auf die Migration der virtuellen Maschine zu der zweiten Netzwerkvorrichtung (101B), Veranlassen (308) der zweiten Netzwerkvorrichtung (101B), den einen oder die mehreren Ströme lokal zu verarbeiten, anstatt den einen oder die mehreren Ströme an die erste Netzwerkvorrichtung (101A) weiterzuleiten.

2. Verfahren nach Anspruch 1, wobei das Veranlassen (304) der dritten Netzwerkvorrichtung (101C), den einen oder die mehreren Ströme weiterzuleiten, ein Durchführen der folgenden Operationen umfasst:
Veranlassen (312) einer Aktualisierung von Weiterleitungstabellen der zweiten Netzwerkvorrichtung (101B), um von der dritten Netzwerkvorrichtung 101C empfangenen Verkehr zu der ersten Netzwerkvorrichtung weiterzuleiten; und
Veranlassen (314) einer Aktualisierung von Weiterleitungstabellen der dritten Netzwerkvorrichtung (101C), um den einen oder die mehreren Ströme zu der zweiten Netzwerkvorrichtung (101B) anstelle der ersten Netzwerkvorrichtung (101A) weiterzuleiten.

3. Verfahren nach Anspruch 2, wobei das Veranlassen der Aktualisierung der Weiterleitungstabellen der zweiten Netzwerkvorrichtung (101B) ein Erzeugen (316) einer Schneller-Failover-Gruppe an der zweiten Netzwerkvorrichtung (101B) umfasst, wobei die Schneller-Failover-Gruppe eine erste Aktion umfasst, die anzeigt, dass eine primäre Ausgabe ein lokaler Port der zweiten Netzwerkvorrichtung (101B) ist, und eine sekundäre Ausgabe ein Port ist, der mit der ersten Netzwerkvorrichtung assoziiert ist, wobei die primäre Ausgabe unten ist und die zweite Ausgabe oben ist.

4. Verfahren nach Anspruch 3, wobei das Veranlassen der zweiten Netzwerkvorrichtung (101B), den einen oder die mehreren Ströme lokal zu verarbeiten, anstatt den einen oder die mehreren Ströme an die erste Netzwerkvorrichtung (101A) weiterzuleiten, Folgendes umfasst:
Erfassen, dass die primäre Ausgabe oben ist; und
Veranlassen der zweiten Netzwerkvorrichtung (101B), den einen oder die mehreren Ströme an den lokalen Port der zweiten Netzwerkvorrichtung (101B) auszugeben.

5. Verfahren nach Anspruch 1, wobei das Verfahren ferner ein Übertragen (208a) einer oder mehrerer Nachrichten an die zweite Netzwerkvorrichtung (101B) umfasst, um zu bestimmen, ob die Migration der virtuellen Maschine abgeschlossen ist.

6. Verfahren nach Anspruch 5, wobei das Verfahren ferner Folgendes umfasst:
Empfangen (208b) einer Angabe von der zweiten Netzwerkvorrichtung (101B), dass die Migration der virtuellen Maschine abgeschlossen ist; und
als Reaktion auf die Feststellung, dass die Migration abgeschlossen ist, Übertragen (208c) einer Nachricht an die zweite Netzwerkvorrichtung (101B), wodurch die zweite Netzwerkvorrichtung (101B) veranlasst wird, den einen oder die mehreren Ströme lokal auszugeben, anstatt den einen oder die mehreren Ströme an die erste Netzwerkvorrichtung (101A) weiterzuleiten.

7. Softwaredefinierter Netzwerk (SDN) -Controller, der kommunikativ mit einem Cloud-Orchestrator 103 gekoppelt sein soll, zur Ermöglichung einer Live-Migration einer virtuellen Maschine von einer ersten Netzwerkvorrichtung (101A) zu einer zweiten Netzwerkvorrichtung (101B), wobei die erste Netzwerkvorrichtung (101A) einen oder mehrere Ströme von einer dritten Netzwerkvorrichtung (101C) empfängt, wobei der SDN-Controller Folgendes umfasst:
ein nichtflüchtiges computerlesbares Medium zum Speichern von Befehlen; und
einen Prozessor, der mit dem nichtflüchtigen computerlesbaren Medium gekoppelt ist, um die gespeicherten Befehle zu verarbeiten zum:
Empfangen (302) einer Angabe (111) von dem Cloud-Orchestrator (103), dass die Migration der virtuellen Maschine von der ersten Netzwerkvorrichtung (101A) zu der zweiten Netzwerkvorrichtung (101B) eingeleitet werden soll;
als Reaktion auf den Empfang der Angabe, Veranlassen (304), dass die dritte Netzwerkvorrichtung (101C) den einen oder die mehreren Ströme zu der ersten Netzwerkvorrichtung (101A) weiterleitet, indem er/sie die zweite Netzwerkvorrichtung (101B) durchläuft/durchlaufen;
Übertragen (306) einer Angabe (113) an den Cloud-Orchestrator (103), dass die Migration der virtuellen Maschine durchgeführt werden kann, wobei die Angabe den Cloud-Orchestrator (103) veranlasst, die Migration der virtuellen Maschine von der ersten Netzwerkvorrichtung (101A) zu der zweiten Netzwerkvorrichtung (101B) abzuschließen; und
als Reaktion auf die Migration der virtuellen Maschine zu der zweiten Netzwerkvorrichtung (101B), Veranlassen (308) der zweiten Netzwerkvorrichtung (101B), den einen oder die mehreren Ströme lokal zu verarbeiten, anstatt den einen oder die mehreren Ströme an die erste Netzwerkvorrichtung weiterzuleiten.

8. SDN-Controller nach Anspruch 7, wobei das Veranlassen der dritten Netzwerkvorrichtung 101C, den einen oder die mehreren Ströme weiterzuleiten, Folgendes umfasst:
Veranlassen (312) einer Aktualisierung der Weiterleitungstabellen der zweiten Netzwerkvorrichtung (101B), um von der dritten Netzwerkvorrichtung (101C) empfangenen Verkehr an die erste Netzwerkvorrichtung (101A) weiterzuleiten; und
Veranlassen (314) einer Aktualisierung der Weiterleitungstabellen der dritten Netzwerkvorrichtung (101C), um den einen oder die mehreren Ströme an die zweite Netzwerkvorrichtung (101B) anstelle der ersten Netzwerkvorrichtung (101A) weiterzuleiten.

9. SDN-Controller nach Anspruch 8, wobei das Veranlassen (312) der Aktualisierung der Weiterleitungstabellen der zweiten Netzwerkvorrichtung (101B) ein Erzeugen (316) einer Schneller-Failover-Gruppe an der zweiten Netzwerkvorrichtung (101B) umfasst, wobei die Schneller-Failover-Gruppe eine erste Aktion umfasst, die anzeigt, dass eine primäre Ausgabe ein lokaler Port der zweiten Netzwerkvorrichtung (101B) ist, und eine sekundäre Ausgabe ein Port ist, der mit der ersten Netzwerkvorrichtung (101A) assoziiert ist, wobei die primäre Ausgabe unten ist und die zweite Ausgabe oben ist.

10. SDN-Controller nach Anspruch 9, wobei das Veranlassen der zweiten Netzwerkvorrichtung (101B), den einen oder die mehreren Ströme lokal zu verarbeiten, anstatt den einen oder die mehreren Ströme an die erste Netzwerkvorrichtung (101A) weiterzuleiten, Folgendes umfasst:
Erfassen, dass die primäre Ausgabe oben ist; und
Veranlassen der zweiten Netzwerkvorrichtung (101B), den einen oder die mehreren Ströme an den lokalen Port der zweiten Netzwerkvorrichtung (101B) auszugeben.

11. SDN-Controller nach Anspruch 7, wobei der Prozessor ferner eine oder mehrere Nachrichten an die zweite Netzwerkvorrichtung (101B) übertragen (208a) soll, um festzustellen, ob die Migration der virtuellen Maschine abgeschlossen ist.

12. SDN-Controller nach Anspruch 11, wobei der Prozessor ferner von der zweiten Netzwerkvorrichtung (101B) eine Angabe empfangen (208b) soll, dass die Migration der virtuellen Maschine abgeschlossen ist; und
als Reaktion auf das Bestimmen, dass die Migration abgeschlossen ist, eine Nachricht an die zweite Netzwerkvorrichtung (101B) übertragen soll, die die zweite Netzwerkvorrichtung (101B) veranlasst (208c), den einen oder die mehreren Ströme lokal auszugeben, anstatt den einen oder die mehreren Ströme an die erste Netzwerkvorrichtung (101A) weiterzuleiten.

13. Nichtflüchtiges computerlesbares Speichermedium, das Befehle speichert, die, wenn sie von einem Prozessor eines softwaredefinierten Netzwerk (SDN) -Controllers ausgeführt werden, der kommunikativ mit einem Cloud-Orchestrator (103) gekoppelt sein soll, den SDN-Controller veranlassen, Operationen zur Ermöglichung einer Live-Migration einer virtuellen Maschine von einer ersten Netzwerkvorrichtung (101A) zu einer zweiten Netzwerkvorrichtung (101B) durchzuführen, wobei die erste Netzwerkvorrichtung (101A) einen oder mehrere Ströme von einer dritten Netzwerkvorrichtung (101C) empfängt, wobei die Operationen Folgendes umfassen:
Empfangen (302) einer Angabe (111) von dem Cloud-Orchestrator (103), dass die Migration der virtuellen Maschine von der ersten Netzwerkvorrichtung (101A) zu der zweiten Netzwerkvorrichtung (101B) eingeleitet werden soll;
als Reaktion auf den Empfang der Angabe, Veranlassen (304), dass die dritte Netzwerkvorrichtung 101C den einen oder die mehreren Ströme zu der ersten Netzwerkvorrichtung (101A) weiterleitet, indem er/sie die zweite Netzwerkvorrichtung (101B) durchläuft/durchlaufen;
Übertragen (306) einer Angabe (113) an den Cloud-Orchestrator (103), dass die Migration der virtuellen Maschine durchgeführt werden kann, wobei die Angabe den Cloud-Orchestrator (103) veranlasst, die Migration der virtuellen Maschine von der ersten Netzwerkvorrichtung (101A) zu der zweiten Netzwerkvorrichtung (101B) abzuschließen; und
als Reaktion auf die Migration der virtuellen Maschine zu der zweiten Netzwerkvorrichtung (101B), Veranlassen (308) der zweiten Netzwerkvorrichtung (101B), den einen oder die mehreren Ströme lokal zu verarbeiten, anstatt den einen oder die mehreren Ströme an die erste Netzwerkvorrichtung weiterzuleiten.

14. Nicht flüchtiges computerlesbares Speichermedium nach Anspruch 13, wobei das Veranlassen der dritten Netzwerkvorrichtung (101C), den einen oder die mehreren Ströme weiterzuleiten, das Durchführen der folgenden Operationen umfasst:
Veranlassen (312) einer Aktualisierung von Weiterleitungstabellen der zweiten Netzwerkvorrichtung (101B), um von der dritten Netzwerkvorrichtung (101C) empfangenen Verkehr zu der ersten Netzwerkvorrichtung weiterzuleiten; und
Veranlassen (314) einer Aktualisierung von Weiterleitungstabellen der dritten Netzwerkvorrichtung (101C), um den einen oder die mehreren Ströme zu der zweiten Netzwerkvorrichtung (101B) anstelle der ersten Netzwerkvorrichtung weiterzuleiten.

15. Nichtflüchtiges computerlesbares Speichermedium nach Anspruch 14, wobei das Veranlassen (312) der Aktualisierung der Weiterleitungstabellen der zweiten Netzwerkvorrichtung (101B) ein Erzeugen (316) einer Schneller-Failover-Gruppe an der zweiten Netzwerkvorrichtung (101B) umfasst, wobei die Schneller-Failover-Gruppe eine erste Aktion umfasst, die angibt, dass eine primäre Ausgabe ein lokaler Port der zweiten Netzwerkvorrichtung (101B) ist, und eine sekundäre Ausgabe ein Port ist, der mit der ersten Netzwerkvorrichtung (101A) assoziiert ist, wobei die primäre Ausgabe unten ist und die zweite Ausgabe oben ist.

16. Nichtflüchtiges computerlesbares Speichermedium nach Anspruch 15, wobei das Veranlassen der zweiten Netzwerkvorrichtung (101B), den einen oder die mehreren Ströme lokal zu verarbeiten, anstatt den einen oder die mehreren Ströme an die erste Netzwerkvorrichtung (101A) weiterzuleiten, Folgendes umfasst:
Erfassen, dass die primäre Ausgabe oben ist; und
Veranlassen der zweiten Netzwerkvorrichtung (101B), den einen oder die mehreren Ströme an den lokalen Port der zweiten Netzwerkvorrichtung (101B) auszugeben.

17. Nichtflüchtiges computerlesbares Speichermedium nach Anspruch 13, wobei die Operationen ferner ein Übertragen (208a) einer oder mehrerer Nachrichten an die zweite Netzwerkvorrichtung (101B) umfassen, um festzustellen, ob die Migration der virtuellen Maschine abgeschlossen ist.

18. Nichtflüchtiges computerlesbares Speichermedium nach Anspruch 17, wobei die Operationen ferner Folgendes umfassen:
Empfangen (208b) einer Angabe von der zweiten Netzwerkvorrichtung (101B), dass die Migration der virtuellen Maschine abgeschlossen ist; und
als Reaktion auf die Feststellung, dass die Migration abgeschlossen ist, Übertragen (208c) einer Nachricht an die zweite Netzwerkvorrichtung (101B), wodurch die zweite Netzwerkvorrichtung (101B) veranlasst wird, den einen oder die mehreren Ströme lokal auszugeben, anstatt den einen oder die mehreren Ströme an die erste Netzwerkvorrichtung (101A) weiterzuleiten.

## Revendications

1. Procédé dans un contrôleur de réseau défini par logiciel (SDN) (105) couplé de manière communicative avec un orchestrateur de nuage (103) pour permettre une migration en direct d'une machine virtuelle depuis un premier dispositif réseau (101A) vers un deuxième dispositif réseau (101B), dans lequel la machine virtuelle traite un ou plusieurs flux reçus au niveau du premier dispositif réseau (101A) à partir d'un troisième dispositif réseau (101C), le procédé comprenant :
la réception (302) à partir de l'orchestrateur de nuage (103) d'une indication (111) que la migration de la machine virtuelle à partir du premier dispositif réseau (101A) au deuxième dispositif réseau (101B) doit être initiée ;
en réponse à la réception de l'indication, la provocation (304) du troisième dispositif réseau (101C) à transmettre l'un ou plusieurs flux vers le premier dispositif réseau en passant par le deuxième dispositif réseau (101B) ;
la transmission (306) à l'orchestrateur de nuage (103) d'une indication (113) que la migration de la machine virtuelle peut être effectuée, dans lequel cette indication provoque l'orchestrateur de nuage (103) à terminer la migration de la machine virtuelle à partir du premier dispositif réseau (101A) au deuxième dispositif réseau (101B) ; et
en réponse à la migration de la machine virtuelle au deuxième dispositif réseau (101B), la provocation (308) du deuxième dispositif réseau (101B) à traiter localement l'un ou plusieurs flux au lieu de transférer l'un ou plusieurs flux au premier dispositif réseau (101A).

2. Procédé selon la revendication 1, dans lequel le fait de provoquer (304) le troisième dispositif réseau (101C) à transférer l'un ou plusieurs flux comprend l'exécution des opérations suivantes :
la provocation (312) d'une mise à jour des tables de transfert du deuxième dispositif réseau (101B) pour transférer le trafic reçu du troisième dispositif réseau (101C) vers le premier dispositif réseau ; et
la provocation (314) d'une mise à jour des tables de transfert du troisième dispositif réseau (101C) pour transférer l'un ou plusieurs flux vers le deuxième dispositif réseau (101B) au lieu du premier dispositif réseau (101A).

3. Procédé selon la revendication 2, dans lequel la mise à jour des tables de transfert du deuxième dispositif réseau (101B) comprend la création (316) d'un groupe de basculement rapide au niveau du deuxième dispositif réseau (101B), dans lequel le groupe de basculement rapide comprend une première action indiquant qu'une sortie primaire est un port local du deuxième dispositif réseau (101B), et qu'une sortie secondaire est un port associé au premier dispositif réseau, dans lequel la sortie primaire est en bas et la deuxième sortie est en haut.

4. Procédé selon la revendication 3, dans lequel le fait de provoquer le deuxième dispositif réseau (101B) à traiter localement l'un ou plusieurs flux au lieu de transférer l'un ou plusieurs flux au premier dispositif réseau (101A) comprend :
la détection de la sortie primaire ; et
la provocation du deuxième dispositif réseau (101B) à sortir l'un ou plusieurs flux au port local du deuxième dispositif réseau (101B) .

5. Procédé selon la revendication 1, dans lequel le procédé comprend en outre le transfert (208a) d'un ou plusieurs messages au deuxième dispositif réseau (101B) pour déterminer si la migration de la machine virtuelle a été terminée.

6. Procédé selon la revendication 5, dans lequel le procédé comprend en outre :
la réception (208b) à partir du deuxième dispositif réseau (101B) d'une indication que la migration de la machine virtuelle est terminée ; et
en réponse à la détermination que la migration est terminée, la transmission (208c) d'un message au deuxième dispositif réseau (101B) provoquant le deuxième dispositif réseau (101B) à sortir localement l'un ou plusieurs flux au lieu de transférer l'un ou plusieurs flux au premier dispositif réseau (101A).

7. Contrôleur de réseau défini par logiciel, SDN, à coupler de manière communicative avec un orchestrateur de nuage (103), pour permettre la migration en direct d'une machine virtuelle à partir d'un premier dispositif réseau (101A) vers un deuxième dispositif réseau (101B), dans lequel le premier un dispositif réseau (101A) reçoit un ou plusieurs flux à partir d'un troisième dispositif réseau (101C), le contrôleur SDN comprenant :
un support lisible par ordinateur non transitoire pour stocker des instructions ; et
un processeur couplé au support lisible par ordinateur non transitoire pour traiter les instructions stockées afin de :
recevoir (302) à partir de l'orchestrateur de nuage (103) une indication (111) que la migration de la machine virtuelle à partir du premier dispositif réseau (101A) vers le deuxième dispositif réseau (101B) doit être initiée ;
en réponse à la réception de l'indication, provoquer (304) le troisième dispositif réseau (101C) à transférer l'un ou plusieurs flux vers le premier dispositif réseau (101A) en passant par le deuxième dispositif réseau (101B) ;
transmettre (306) à l'orchestrateur de nuage (103) une indication (113) que la migration de la machine virtuelle peut être effectuée, dans lequel cette indication provoque l'orchestrateur de nuage (103) à terminer la migration de la machine virtuelle à partir du premier dispositif réseau (101A) au deuxième dispositif réseau (101B) ; et
en réponse à la migration de la machine virtuelle au deuxième dispositif réseau (101B), provoquer (308) le deuxième dispositif réseau (101B) à traiter localement l'un ou plusieurs flux au lieu de transférer l'un ou plusieurs flux au premier réseau dispositif.

8. Contrôleur SDN selon la revendication 7, dans lequel pour provoquer le troisième dispositif réseau (101C) à transférer l'un ou plusieurs flux comprend :
la provocation (312) d'une mise à jour des tables de transfert du deuxième dispositif réseau (101B) pour transférer le trafic reçu à partir du troisième dispositif réseau (101C) vers le premier dispositif réseau (101A) ; et
la provocation (314) d'une mise à jour des tables de transfert du troisième dispositif réseau (101C) pour transférer l'un ou plusieurs flux vers le deuxième dispositif réseau (101B) au lieu du premier dispositif réseau (101A).

9. Contrôleur SDN selon la revendication 8, dans lequel la provocation (312) de la mise à jour des tables de transfert du deuxième dispositif réseau (101B) comprend la création (316) d'un groupe de basculement rapide au niveau du deuxième dispositif réseau (101B), dans lequel le groupe de basculement rapide comprend une première action indiquant qu'une sortie primaire est un port local du deuxième dispositif réseau (101B) et qu'une sortie secondaire est un port associé au premier dispositif réseau (101A), dans lequel la sortie primaire est en bas et la deuxième sortie est en haut.

10. Contrôleur SDN selon la revendication 9, dans lequel la provocation du deuxième dispositif réseau (101B) à traiter localement l'un ou plusieurs flux au lieu de transférer l'un ou plusieurs flux au premier dispositif réseau (101A) comprend :
la détection que la sortie primaire est en haut ; et
la provocation du deuxième dispositif réseau (101B) à sortir l'un ou plusieurs flux au port local du deuxième dispositif réseau (101B) .

11. Contrôleur SDN selon la revendication 7, dans lequel le processeur doit en outre transmettre (208a) un ou plusieurs messages au deuxième dispositif réseau (101B) pour déterminer si la migration de la machine virtuelle a été terminée.

12. Contrôleur SDN selon la revendication 11, dans lequel le processeur doit en outre
recevoir (208b) à partir du deuxième dispositif réseau (101B) une indication que la migration de la machine virtuelle est terminée ; et
en réponse à la détermination que la migration est terminée, transmettre un message au deuxième dispositif réseau (101B) provoquant (208c) le deuxième dispositif réseau (101B) à sortir localement l'un ou plusieurs flux au lieu de transférer l'un ou plusieurs flux au premier dispositif réseau (101A).

13. Support de stockage lisible par ordinateur non transitoire stockant des instructions qui, lorsqu'elles sont exécutées par un processeur d'un contrôleur de réseau défini par logiciel, SDN, pour être couplé de manière communicative avec un orchestrateur de nuage (103), provoque le contrôleur SDN à effectuer des opérations pour permettre la migration en direct d'une machine virtuelle à partir d'un premier dispositif réseau (101A) vers un deuxième dispositif réseau (101B), dans lequel le premier dispositif réseau (101A) reçoit un ou plusieurs flux à partir d'un troisième dispositif réseau (101C), les opérations comprenant :
la réception (302) à partir de l'orchestrateur de nuage (103) d'une indication (111) que la migration de la machine virtuelle à partir du premier dispositif réseau (101A) vers le deuxième dispositif réseau (101B) doit être initiée ;
en réponse à la réception de l'indication, la provocation (304) du troisième dispositif réseau (101C) à transférer l'un ou plusieurs flux vers le premier dispositif réseau (101A) en passant par le deuxième dispositif réseau (101B) ;
la transmission (306) à l'orchestrateur de nuage (103) d'une indication (113) que la migration de la machine virtuelle peut être effectuée, cette indication provoquant l'orchestrateur de nuage (103) à terminer la migration de la machine virtuelle à partir du premier dispositif réseau (101A) au deuxième dispositif réseau (101B) ; et
en réponse à la migration de la machine virtuelle vers le deuxième dispositif réseau (101B), la provocation (308) du deuxième dispositif réseau (101B) à traiter localement l'un ou plusieurs flux au lieu de transférer l'un ou plusieurs flux au premier dispositif réseau.

14. Support de stockage lisible par ordinateur non transitoire selon la revendication 13, dans lequel le fait de provoquer le troisième dispositif réseau (101C) à transférer l'un ou plusieurs flux comprend l'exécution des opérations suivantes :
la provocation (312) d'une mise à jour des tables de transfert du deuxième dispositif réseau (101B) pour transférer le trafic reçu à partir du troisième dispositif réseau (101C) vers le premier dispositif réseau ; et
la provocation (314) d'une mise à jour des tables de transfert du troisième dispositif réseau (101C) pour transférer l'un ou plusieurs flux vers le deuxième dispositif réseau (101B) au lieu du premier dispositif réseau.

15. Support de stockage lisible par ordinateur non transitoire selon la revendication 14, dans lequel la mise à jour (312) des tables de transfert du deuxième dispositif réseau (101B) comprend la création (316) d'un groupe de basculement rapide au niveau du deuxième dispositif réseau (101B), dans lequel le groupe de basculement rapide comprend une première action indiquant qu'une sortie primaire est un port local du deuxième dispositif réseau (101B), et qu'une sortie secondaire est un port associé au premier dispositif réseau (101A), dans lequel la sortie primaire est en bas et la deuxième sortie est en haut.

16. Support de stockage lisible par ordinateur non transitoire selon la revendication 15, dans lequel la provocation du deuxième dispositif réseau (101B) à traiter l'un ou plusieurs flux localement au lieu de transférer l'un ou plusieurs flux au premier dispositif réseau (101A) comprend :
la détection que la sortie primaire est en haut ; et
la provocation du deuxième dispositif réseau (101B) à sortir l'un ou plusieurs au port local du deuxième dispositif réseau (101B).

17. Support de stockage lisible par ordinateur non transitoire selon la revendication 13, dans lequel les opérations comprennent en outre la transmission (208a) d'un ou plusieurs messages au deuxième dispositif réseau (101B) pour déterminer si la migration de la machine virtuelle a été terminée.

18. Support de stockage lisible par ordinateur non transitoire selon la revendication 17, dans lequel les opérations comprennent en outre :
la réception (208b) à partir du deuxième dispositif réseau (101B) d'une indication que la migration de la machine virtuelle est terminée ; et
en réponse à la détermination que la migration est terminée, la transmission (208c) d'un message au deuxième dispositif réseau (101B) provoquant le deuxième dispositif réseau (101B) à sortir localement l'un ou plusieurs flux au lieu de transférer l'un ou plusieurs flux au premier dispositif réseau (101A).
